# EUROPEAN PATENT APPLICATION

(11) **EP 4 782 116 A1**
(43) Date of publication of application: **29.07.2026**
(21) Application number: 24884075.3
(22) Date of filing: 30.07.2024
(51) Int. Cl.: B07C 5/00, B07C 5/02, B07C 5/36, G01N 21/13, G01N 21/89

(54) **DETECTION DEVICE**

(30) Priority: 31.10.2023 CN 202311428734
(71) Applicant: Contemporary Amperex Technology Co., Limited, Ningde, Fujian 352100 (CN)
(72) Inventor: SHI, Yunru, Ningde, Fujian 352100 (CN); YANG, Mukai, Ningde, Fujian 352100 (CN); PAN, Wensheng, Ningde, Fujian 352100 (CN); ZHANG, Cong, Ningde, Fujian 352100 (CN); FAN, Xiang, Ningde, Fujian 352100 (CN)
(74) Representative: Kraus & Lederer PartGmbB
(86) International application number: PCT/CN2024/108605
(87) International publication number: WO 2025/092068

(57) **Abstract**

A inspection device (100), comprising: a first inspection module (20) and a second inspection module (30), which are respectively used for detecting different parts of a battery cell (200); a loading module (40), which is used for acquiring and transferring battery cells, wherein the loading module can drive the battery cells to pass through the first inspection module; a carrier assembly (50), which is used for receiving the battery cells, which are transferred from the loading module, wherein the carrier assembly is used for conveying the battery cells to pass through the second inspection module; and an unloading module (60), which is used for acquiring and transferring the battery cells, which are conveyed by the carrier assembly. In the inspection device, various inspection means are respectively set as a first inspection module and a second inspection module, and a feeding module can pass through the first inspection module during a process of transferring battery cells, so that the time required for detecting the battery cells on a carrier assembly is shortened, the structural arrangement is optimized, and the inspection efficiency is improved.

## Description

The present application claims priority to Chinese Patent Application No. 202311428734.5, filed with China National Intellectual Property Administration on October 31, 2023 and entitled "INSPECTION DEVICE", which is incorporated herein by reference in its entirety.

### TECHNICAL FIELD

The present application relates to the technical field of battery inspection, and in particular, to an inspection device.

### BACKGROUND

A battery cell, as an essential component of a power battery, may seriously affect the performance of the power battery if defects are present on the surface of the battery cell. The appearance inspection of the battery cell before it is loaded into a lower chamber is the final step in the safety inspection of the battery cell, and is related to the safety problem of the battery cell. Therefore, the appearance inspection of the battery cell is very important.

At present, in automated inspection devices mainly used for the appearance inspection of the battery cell, sensors, cameras, and the like used for inspection are mostly arranged in a centralized manner. As a result, the efficiency of the inspection devices often depends on the inspection cycle of inspection units, while various conveying members, such as a loading member and an unloading member, are prone to remaining idle, resulting in the cycle of the conveying members not being fully utilized. At present, there are also solutions in which a plurality of identical inspection units are repeatedly provided to improve the efficiency of the conveying members. However, such devices have a complex structure, high functional redundancy, a high failure rate, and high cost.

### SUMMARY

In view of the above problem, the present application provides an inspection device, such that the mechanical structure of the inspection device can be simplified and the efficiency of cell inspection can be improved.

Embodiments of the present application provide an inspection device applied to inspection of a battery cell. The inspection device includes:
a first inspection module and a second inspection module respectively configured to inspect different parts of the battery cell;
a loading module configured to acquire and transfer the battery cell, the loading module being capable of driving the battery cell to pass through the first inspection module;
a carrier assembly configured to receive the battery cell transferred from the loading module, the carrier assembly being configured to convey the battery cell to pass through the second inspection module; and
an unloading module configured to acquire and transfer the battery cell transported by the carrier assembly.

In the technical solutions of the embodiments, various inspection units in the inspection device are separately configured as the first inspection module and the second inspection module, such that the loading module can pass through the first inspection module during the process of transferring the battery cells, and the first inspection module can inspect the passing battery cells during this process, thereby reducing the time required for the inspection of the battery cells on the carrier assemblies, optimizing the structural arrangement, and improving the inspection efficiency.

In some embodiments, the inspection device further includes a first discharge port and a second discharge port, and the unloading module is further configured to transfer the battery cell to a first discharge port or a second discharge port.

In the technical solutions of the embodiments, the unloading module can separately transfer the battery cells to the first discharge port and the second discharge port, such that the inspection device can separately output qualified battery cells and unqualified battery cells, thereby increasing the automation degree of the inspection device and improving the inspection efficiency of the inspection device.

In some embodiments, the unloading module includes an unloading transfer assembly, an unloading conveyor assembly, and an unloading sorting assembly;
the unloading transfer assembly is configured to acquire the battery cell from the carrier assembly and transfer the battery cell to the unloading conveyor assembly;
the unloading conveyor assembly is configured to enable the battery cell transferred from the unloading transfer assembly to pass through the unloading sorting assembly and be conveyed to the second discharge port;
the unloading sorting assembly is configured to acquire the battery cell from the unloading conveyor assembly and transfer the battery cell to the first discharge port.

The technical solutions of the embodiments provide some structures in the unloading module. The unloading transfer assembly is configured to transfer the battery cells to the unloading conveyor assembly, the unloading conveyor assembly is configured to finally convey the battery cells to the second discharge port, and the unloading sorting assembly can acquire the qualified battery cells during this process, such that the battery cells at the second discharge port are all unqualified products, and the unloading module is capable of sorting the qualified battery cells and the unqualified battery cells. In addition, the unloading conveyor assembly can also serve as an intermediate transfer for the battery cells, such that the fluency of the operation of the unloading module is improved, so as to better design the cycle time of the inspection device.

In some embodiments, the unloading conveyor assembly includes at least two unloading conveyor belts, and each unloading conveyor belt is configured to receive the battery cell transferred from the unloading transfer assembly and to convey the battery cell to the second discharge port.

The technical solutions of the embodiments provide some structures of the unloading conveyor assembly, and a plurality of unloading conveyor belts are provided to simultaneously convey the battery cells, thereby further improving the efficiency.

In some embodiments, the at least two unloading conveyor belts are sequentially disposed in a first direction, the unloading conveyor belts are provided with unloading positions, and the unloading positions on different unloading conveyor belts are sequentially disposed in a second direction;
the first direction is perpendicular to the second direction, and the second direction is parallel to an extension direction of the unloading conveyor belt.

During the process of transferring the battery cells to the unloading conveyor belts by the unloading transfer assembly, since the battery cells being transferred may cross over other battery cells located on the unloading conveyor belts, in this case, if the battery cells being transferred fall, collisions between the battery cells may occur, which may lead to safety accidents such as fire or explosion. Accordingly, in the technical solutions of the embodiments, the unloading positions are disposed on the unloading conveyor belts, and the unloading positions on different unloading conveyor belts are disposed in a staggered manner, such that during the process of transferring the battery cells to the unloading conveyor belts by the unloading transfer assembly, other battery cells are not prone to appear below the battery cells being transferred, thereby reducing the occurrence of safety accidents caused by the battery cells falling, and improving the safety performance of the inspection device.

In some embodiments, the unloading transfer assembly includes unloading variable-pitch grippers, and the unloading variable-pitch grippers are configured to transfer the battery cells from the carrier assemblies to different unloading positions.

Different unloading positions are disposed in a staggered manner; that is, the distances between the unloading positions and the carrier assemblies are different. Therefore, in the technical solutions of the embodiments, the unloading variable-pitch grippers can simultaneously obtain the battery cells from the carrier assemblies and simultaneously transfer the battery cells to different unloading positions, such that the battery cells can remain synchronized during the transfer process, so as to design the takt time of this step and improve the safety performance of the inspection device in coordination with the operation of the unloading conveyor belts.

**In** some embodiments, the unloading module further includes a buffer assembly, the unloading sorting assembly is capable of transferring the battery cell to the buffer assembly, and the unloading sorting assembly is capable of transferring the battery cell from the buffer assembly to the unloading conveyor assembly.

Since the unloading conveyor assembly is configured to convey the battery cells to the unloading sorting assembly and to convey the unqualified battery cells to the second discharge port, and the unloading sorting assembly is configured to transfer the qualified battery cells to the first discharge port, the number of battery cells acquired by the unloading sorting assembly during each process of transferring the qualified battery cells may be different, resulting in that the number of qualified battery cells output by the inspection device each time may be different, which may affect the subsequent operation of other devices. Accordingly, to ensure that the number of battery cells transferred to the first discharge port by the unloading sorting assembly each time is the same, the technical solutions of the embodiments provide the buffer assembly. The sorting assembly can first transfer an insufficient number of battery cells to the buffer assembly for pre-storage, or the sorting assembly can acquire the pre-stored qualified battery cells from the buffer assembly to make up the number, such that the number of battery cells finally transferred to the first discharge port by the unloading sorting assembly is the same.

**In** some embodiments, the buffer assembly includes buffer positions, and the buffer positions are configured to accommodate the battery cells;
a number of the buffer positions is one less than a number of the unloading conveyor belts, or a number of the buffer positions is greater than or equal to a number of the unloading conveyor belts.

In the technical solutions of the embodiments, a plurality of buffer positions are disposed on the buffer assembly, such that the buffer assembly can adapt to various cases corresponding to different numbers of qualified battery cells.

In some embodiments, the unloading sorting assembly includes a sorting support and sorting grippers;
the sorting grippers are movably disposed on the sorting support, the sorting grippers are capable of transferring the battery cells from the unloading conveyor belts to the buffer assembly or the first discharge port, and the sorting grippers are capable of transferring the battery cells from the buffer assembly to the unloading conveyor belts.

The technical solutions of the present embodiment provide some structures of the unloading sorting assembly to separately grip the battery cells by a plurality of independent sorting grippers, so as to acquire the qualified battery cells in the unloading conveyor assembly without avoiding the unqualified battery cells, thereby achieving the sorting effect. In addition, the independent sorting grippers can also acquire the battery cells from the buffer positions according to the number of qualified battery cells, such that the number of battery cells transferred to the first discharge port by the unloading sorting assembly can be consistent.

In some embodiments, a number of the sorting grippers is the same as a number of the unloading conveyor belts, and the sorting grippers are disposed opposite to corresponding unloading conveyor belts.

In the technical solutions of the embodiments, the number of the sorting grippers is further defined, and the sorting grippers are in one-to-one correspondence with the unloading conveyor belts, such that the sorting grippers can independently acquire the qualified battery cells, thereby achieving the sorting effect.

In some embodiments, the unloading sorting assembly further includes sorting blocking members, the sorting blocking members are movably disposed on the sorting support, and the sorting blocking members are capable of blocking the unloading conveyor assembly from conveying the battery cells to the second discharge port.

The unloading conveyor assembly can finally convey the battery cells to the second discharge port, and the unloading sorting assembly can acquire the qualified battery cells during this process, such that the battery cells at the second discharge port are all unqualified products. Accordingly, the technical solutions of the embodiments provide the sorting blocking members. During the process of conveying the battery cells to the second discharge port by the unloading conveyor assembly, the qualified battery cells are blocked by the sorting blocking members, such that the sorting grippers can acquire the corresponding qualified battery cells, and the unloading conveyor assembly can convey the unqualified battery cells to the second discharge port, thereby achieving the effect of sorting the qualified battery cells and the unqualified battery cells.

**In** some embodiments, a number of the sorting blocking members is the same as a number of the unloading conveyor belts, and the sorting blocking members are in one-to-one correspondence with the unloading conveyor belts.

**In** the technical solutions of the embodiments, the sorting blocking members are in one-to-one correspondence with the unloading conveyor belts, such that the sorting blocking members block the qualified battery cells conveyed on the unloading conveyor belts, thereby assisting the unloading conveyor belts and the sorting grippers to achieve the sorting effect.

**In** some embodiments, the loading module includes a loading transfer assembly, a loading conveyor assembly, and a loading transport assembly, the loading transfer assembly is configured to acquire the battery cell and transfer the battery cell to the loading conveyor assembly, the loading conveyor assembly is configured to acquire the battery cell from the loading transfer assembly and enable the battery cell to pass through the first inspection module, and the loading transport assembly is configured to acquire the battery cell from the loading conveyor assembly and transfer the battery cell to the carrier assembly.

The technical solutions of the embodiments provide some structures of the loading module. The loading transfer assembly acquires the battery cells and transfers the battery cells to the loading conveyor assembly, and the loading conveyor assembly drives the battery cells to pass through the first inspection module, such that the first inspection module inspects the passing battery cells. During the process of conveying the battery cells by the loading conveyor assembly, the loading transfer assembly can repeat the operation of acquiring the battery cells again to improve the inspection efficiency, so as to better design the cycle time of the inspection device.

**In** some embodiments, the loading module further includes an intermediate transfer assembly;
the loading transfer assembly includes two loading transfer grippers, either of which is configured to acquire the battery cell and transfer the battery cell to the intermediate transfer assembly, and the other of which is configured to acquire the battery cell from the intermediate transfer assembly and transfer the battery cell to the loading conveyor assembly.

The technical solutions of the embodiments further provide some structures of the loading module, and the loading transfer assembly includes two loading transfer grippers, one of which can transfer the battery cell to the intermediate transfer assembly, and the other one of which can transfer the battery cell from the intermediate transfer assembly to the loading conveyor assembly. The two loading transfer grippers can operate simultaneously to further improve the inspection efficiency and reduce the intervals between operations, so as to better design the cycle time of the inspection device.

**In** some embodiments, the loading module further includes a loading handling assembly and a singulation assembly, and the loading handling assembly is configured to acquire the battery cell from the loading conveyor assembly and transfer the battery cell to the singulation assembly;
the singulation assembly is configured to accommodate the battery cell, and the loading transport assembly is capable of acquiring the battery cell from the singulation assembly.

The technical solutions of the embodiments further provide some structures of the loading module. The loading handling assembly transfers the battery cells on the loading conveyor assembly, and the singulation assembly receives and temporarily stores the battery cells from the loading handling assembly to shorten the operation cycle of the loading conveyor assembly, so as to ensure a good design of the cycle time of the inspection device.

In some embodiments, the singulation assembly includes at least two loading positions, and the at least two loading positions are sequentially disposed in a third direction;
the singulation assembly further includes at least two singulation belts, the at least two singulation belts are sequentially disposed in a fourth direction, and the singulation belts are in one-to-one correspondence with the loading positions;
the third direction is an extension direction of the singulation belt, and the fourth direction is perpendicular to the third direction.

During the process of transferring the battery cells to the carrier assemblies by the loading transport assembly, since the battery cells being transferred may cross over other battery cells located on the singulation assembly, in this case, if the battery cells being transferred fall, collisions between the battery cells may occur, which may lead to safety accidents such as fire or explosion. Accordingly, in the technical solutions of the embodiments, the loading positions are disposed on the singulation assembly, and different loading positions are disposed in a staggered manner, such that during the process of transferring the battery cells to the carrier assemblies by the loading transport assembly, other battery cells are not prone to appear below the battery cells being transferred, thereby reducing the occurrence of safety accidents caused by the battery cells falling, and improving the safety performance of the inspection device.

In some embodiments, the loading transport assembly includes loading variable-pitch grippers, and the loading variable-pitch grippers are configured to transfer the battery cells in different loading positions to different carrier assemblies.

Different loading positions are disposed in a staggered manner; that is, the distances between the loading positions and the carrier assemblies are different. Therefore, in the technical solutions of the embodiments, the loading variable-pitch grippers can simultaneously obtain the battery cells from the singulation assembly and simultaneously transfer the battery cells to different positions on the carrier assemblies, such that the battery cells can remain synchronized during the transfer process, so as to design the takt time of this step and improve the safety performance of the inspection device in coordination with the operation of the singulation assembly.

**In** some embodiments, the inspection device further includes a standard calibration module, the standard calibration module is configured to convey a standard battery to the loading module, and the standard calibration module is further configured to receive the standard battery conveyed from the unloading module.

To enable the inspection device to have high inspection accuracy, it is necessary to frequently calibrate the inspection device. Accordingly, the technical solutions of the embodiments provide the standard calibration module. The standard calibration module can convey the standard battery to the loading module, and for a battery that meets all parameters of the standard battery, after the standard battery is conveyed to the loading module, the standard battery can be first handled by the carrier module, then by the unloading module, and is finally sent back to the standard calibration module. During this process, the first inspection module and the second inspection module can inspect the standard battery, and the operator can determine whether the inspection device is abnormal according to the monitoring results, thereby achieving the effect of calibrating the inspection device.

**In** some embodiments, the standard calibration module includes at least two calibration conveyor belts, and each calibration conveyor belt is configured to convey one standard battery.

**In** the technical solutions of the embodiments, the standard calibration module includes a plurality of calibration conveyor belts, so as to correspond to the intermediate transfer assembly and the unloading conveyor assembly. As a result, the calibration conveyor belt conveys the standard battery to the intermediate transfer assembly, and the unloading conveyor assembly sends the standard battery back to the calibration conveyor belt.

**In** some embodiments, the carrier assembly includes at least two carriers, and each carrier is configured to carry the battery cell and drive the battery cell to pass through the second inspection module.

The technical solutions of the embodiments provide some structures of the carrier assembly. The carrier assembly includes at least two carriers, such that the carrier assembly can simultaneously convey a plurality of battery cells, and the second inspection module can inspect the plurality of battery cells to improve the inspection efficiency.

In some embodiments, the first inspection module includes a bottom surface inspection assembly, and the bottom surface inspection assembly is configured to inspect a bottom surface of the battery cell; and/or
the first inspection module includes first side surface inspection assemblies, and the first side surface inspection assemblies are configured to inspect two opposite side surfaces of the battery cell.

The technical solutions of the embodiments provide some structures of the first inspection module, such that the first inspection module can inspect the bottom surface and two opposite side surfaces of the passing battery cell.

In some embodiments, the second inspection module includes a top surface inspection assembly, and the top surface inspection assembly is configured to inspect a top surface of the battery cell; and/or
the second inspection module includes a post terminal inspection assembly, and the post terminal inspection assembly is configured to inspect a post terminal of the battery cell; and/or
the second inspection module includes an anti-explosion valve inspection assembly, and the anti-explosion valve inspection assembly is configured to inspect an anti-explosion valve of the battery cell; and/or
the second inspection module includes second side surface inspection assemblies, the second side surface inspection assemblies each include at least one inspection unit, and the second side surface inspection assemblies are configured to inspect two opposite side surfaces of the battery cell.

The technical solutions of the embodiments provide some structures of the second inspection module, such that the second inspection module can inspect the post terminal, the anti-explosion valve, the top surface, and the other two opposite side surfaces of the passing battery cell.

**In** some embodiments, the unloading module is further configured to acquire the battery cell and transfer the battery cell to the carrier assembly;
the carrier assembly is further configured to receive the battery cell transferred from the unloading module and convey the battery cell to pass through the second inspection module;
the loading module is further configured to acquire the battery cell from the carrier assembly and drive the battery cell to pass through the first inspection module.

**In** the technical solutions of the embodiments, the inspection device can also operate in reverse. For example, when the inspection device inspects that there are many unqualified battery cells, the inspection device can operate in reverse, such that the battery cells enter the inspection device from the unloading module, and the battery cells are reinspected, thereby further confirming whether the battery cells are qualified.

**In** some embodiments, the inspection device further includes a first feeding module with one end extending to the unloading module, the first feeding module is configured to convey the battery cell, the loading module can acquire the battery cell from the first feeding module, and the unloading module can transfer the battery cell to the first feeding module.

**In** the technical solutions of the embodiments, the first feeding module is provided, such that the first feeding module conveys the battery cells output after the previous process to the inspection device for acquisition by the loading module. In addition, since the first feeding module extends to the first discharge port, the first feeding module can also convey the battery cells transferred by the unloading module to the next process, so as to achieve continuous inspection of the battery cells.

**In** some embodiments, the inspection device further includes a second feeding module disposed at the unloading module, and the unloading module is capable of conveying the battery cell to the second feeding module.

**In** the technical solutions of the embodiments, the second feeding module is provided, such that the second feeding module can convey the battery cells at the second discharge port to other positions, and the unloading module can continue to convey the unqualified battery cells to the second discharge port without causing blockage, jamming, or the like at the second discharge port.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

To more clearly illustrate the technical solutions in embodiments of the present application, the drawings required for illustrating the embodiments or description of the prior art are briefly described below. Apparently, the drawings in the following description illustrate merely some embodiments of the present application, and those of ordinary skill in the art may still derive other drawings from these drawings without creative efforts.
FIG. 1 is an exploded schematic view of a battery cell according to some embodiments of the present application;
FIG. 2 is a schematic view of an inspection device according to some embodiments of the present application;
FIG. 3 is a schematic view of a loading module, an unloading module, and related mechanisms in the inspection device shown in FIG. 2;
FIG. 4 is a schematic three-dimensional view of an unloading sorting assembly in the inspection device shown in FIG. 2;
FIG. 5 is a schematic three-dimensional view of an unloading conveyor assembly and related structures in the inspection device shown in FIG. 2;
FIG. 6 is a schematic three-dimensional view of a sorting gripper in the unloading sorting assembly shown in FIG. 4;
FIG. 7 is a schematic three-dimensional view of a loading conveyor assembly in the inspection device shown in FIG. 2;
FIG. 8 is a schematic three-dimensional view of a loading handling assembly and a loading transport assembly in the inspection device shown in FIG. 2;
FIG. 9 is a schematic three-dimensional view of the loading handling assembly in FIG. 8;
FIG. 10 is a schematic three-dimensional view of the loading transport assembly in FIG. 8;
FIG. 11 is a schematic three-dimensional view of a loading conveyor assembly and a first feeding module shown in FIG. 2;
FIG. 12 is a schematic three-dimensional view of the loading conveyor assembly shown in FIG. 11; and
FIG. 13 is a schematic view of a singulation assembly in the inspection device shown in FIG. 2.

Reference numerals in the drawings have the following meanings:
100: inspection device;
10: frame;
20: first inspection module; 21: bottom surface inspection assembly; 22: first side surface inspection assembly;
30: second inspection module; 31: top surface inspection assembly; 32: post terminal inspection assembly; 33: anti-explosion valve inspection assembly; 34: second side surface inspection assembly;
40: loading module; 41: loading transfer assembly; 411: loading transfer gripper; 42: loading conveyor assembly; 43: intermediate transfer assembly; 44: loading handling assembly; 441: handling support; 442: handling movable plate; 443: handling gripper; 45: singulation assembly; 451: loading position; 452: singulation belt; 46: loading transport assembly; 461: transport support; 462: transport movable plate; 463: transport gripper;
50: carrier assembly; 51: carrier; 55: track;
60: unloading module; 61: unloading transfer assembly; 611: unloading variable-pitch gripper; 62: unloading conveyor assembly; 621: unloading conveyor belt; 622: unloading position; 63: unloading sorting assembly; 631: sorting support; 632: sorting gripper; 633: sorting blocking member; 634: sorting base; 64: buffer assembly;
70: standard calibration module; 71: standard battery; 72: calibration conveyor belt;
80: first feeding module;
90: second feeding module;
200: battery cell;
201: end cover; 2011: post terminal; 2012: anti-explosion valve; 202: housing body; 203: battery cell assembly.

### EMBODIMENTS OF THE PRESENT DISCLOSURE

Embodiments of the technical solutions of the present application will be described in detail below with reference to the drawings. The following embodiments are only used to more clearly illustrate the technical solutions of the present application, and therefore, are only exemplary and do not limit the protection scope of the present application.

Unless otherwise defined, all technical and scientific terms used herein have the same meaning as commonly understood by those skilled in the technical field to which the present application belongs. The terms used herein are only used to illustrate the specific embodiments, rather than limit the present application. The terms "include", "comprise", "have", and "provided with", and any variants thereof in the specification and claims of the present application and the above description of the drawings are intended to cover non-exclusive inclusions.

In the description of the embodiments of the present application, the technical terms such as "first" and "second" are only used to distinguish different objects and should not be interpreted as indicating or implying the relative importance or implicitly indicating the number, specific order, or primary and secondary relationship of the technical features referred to. In the description of the embodiments of the present application, unless otherwise specifically defined, "plurality of" means two or more.

Reference in the present application to "embodiment" means that a particular feature, structure, or characteristic described in combination with the embodiment may be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the embodiments described herein may be combined with other embodiments.

In the description of the embodiments of the present application, the term "and/or" is merely a way to describe the association relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to two or more (including two). Similarly, "plurality of groups" refers to two or more (including two) groups, and "plurality of pieces" refers to two or more (including two) pieces.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like indicate orientations or positional relationships based on those shown in the drawings. They are merely for the convenience of describing the embodiments of the present application and simplifying the description, rather than indicating or implying that the apparatus or element referred to must have a specific orientation or be constructed and operated in the specific orientation, and thus should not be construed as a limitation to the embodiments of the present application.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application may be interpreted according to specific conditions.

At present, judging from the trends in the market, the application of power batteries is becoming increasingly widespread. Power batteries are not only applied in energy storage power systems, such as hydropower, thermal power, wind power, and solar power stations, but also widely applied in electric transportation vehicles, such as electric bicycles, electric motorcycles, or electric vehicles, as well as in military equipment, aerospace, and other fields. With the continuous expansion of the application field of power batteries, the market demand for power batteries is also constantly increasing.

A battery cell, as an essential component of a power battery, may seriously affect the performance of the power battery if defects are present on the surface of the battery cell. If a dent, crack, or the like appears on the surface of a housing of the battery cell, the battery cell may suffer from liquid leakage, instability, or the like, which greatly reduces the stability of the battery cell and may easily lead to potential hazards such as fire during use. The defects on the surface of the battery cell further include appearance abnormalities of a post terminal and an anti-explosion valve, which may also have a negative impact on the stability and the safety of the battery cell.

To improve the safety performance of the battery cell, the appearance inspection of the battery cell before it is loaded into a lower chamber is an important step in the safety inspection of the battery cell, and is related to the safety problem of the battery cell.

At present, in automated inspection devices mainly used for the appearance inspection of the battery cell, sensors, cameras, and the like used for inspection are mostly arranged in a centralized manner. As a result, the efficiency of the inspection devices often depends on the inspection cycle of inspection units, while various conveying members, such as a loading member and an unloading member, are prone to remaining idle, resulting in the cycle of the conveying members not being fully utilized. That is, in an inspection cycle of such devices, the efficiency of the conveying member does not match that of the inspection device. This results in low efficiency of the conveying member, and may even involve an idle waiting process. Consequently, the inspection takt of the inspection device is not easy to set, and the inspection takt of the inspection device is not easy to accelerate, resulting in low inspection efficiency.

At present, there are also solutions in which a plurality of identical inspection units are repeatedly provided to improve the efficiency of the conveying members. In such devices, a plurality of groups of identical inspection units are generally repeatedly arranged, such that the inspection cycle of the inspection units can match the conveying cycle of the conveying members, and the inspection takt of the inspection device can be accelerated, thereby helping enable an operator to set the takt according to requirements. However, such devices generally have a complex structure and high functional redundancy, and an increase in the number of inspection units may also lead to an increase in the failure rate and the cost.

Based on the above considerations, to solve the problem that the current inspection device cannot simultaneously achieve the simplicity of the structure, the low functional redundancy, and the high efficiency, the embodiments of the present application provide an inspection device. An inspection module is divided into two parts, i.e., a first inspection module and a second inspection module, and the first inspection module is disposed at a loading module, such that the first inspection module can inspect the battery cells during the process of conveying the battery cells by the loading module, thereby reducing the time required for the inspection of the battery cells on a carrier assembly, optimizing the structural arrangement, and improving the inspection efficiency.

An inspection device 100 disclosed in the embodiments of the present application is configured to perform appearance inspection on a battery cell 200, and the battery cell 200 may be cylindrical, flat, rectangular parallelepiped-shaped, or in other shapes. That is, the battery cell 200 to be inspected may be a square-housing battery cell, a cylindrical battery cell, or the like. The battery cell 200 may be a secondary battery or a primary battery; it may also be a lithium-sulfur battery, a sodium-ion battery, or a magnesium-ion battery, but is not limited thereto.

In the following embodiments, for ease of description, the present application is illustrated by taking the battery cell 200 as a square-housing battery cell according to an embodiment of the present application.

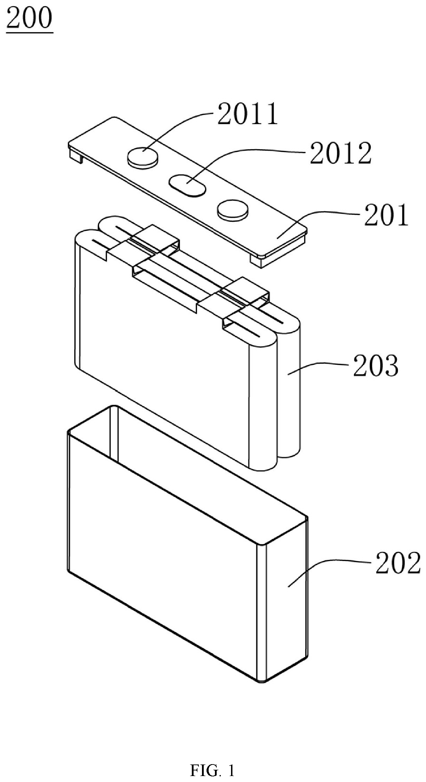

Referring to FIG. 1, FIG. 1 is a schematic view of an exploded structure of the battery cell 200 according to some embodiments of the present application. The battery cell 200 refers to the smallest unit forming a battery. As illustrated in FIG. 1, the battery cell 200 includes an end cover 201, a housing body 202, a battery cell assembly 203, and other functional components.

The end cover 201 refers to a component that lids the opening of the housing body 202 to isolate the internal environment of the battery cell 200 from the external environment. Without limitation, the shape of the end cover 201 may be adapted to the shape of the housing body 202 to match the housing body 202. Optionally, the end cover 201 may be made of a material with a certain hardness and strength (for example, an aluminum alloy), such that the end cover 201 is not easily deformed when being squeezed or collided. This enables the battery cell 200 to have higher structural strength, and the safety performance can also be improved. Functional components such as a post terminal 2011 may be disposed on the end cover 201. The post terminal 2011 may be configured to be electrically connected to the battery cell assembly 203 to output or input the electric energy of the battery cell 200. In some embodiments, the end cover 201 may also be provided with a pressure relief mechanism, such as an anti-explosion valve 2012, for releasing the internal pressure when the internal pressure or temperature of the battery cell 200 reaches the threshold. The end cover 201 may also be made of various materials, such as copper, iron, aluminum, stainless steel, aluminum alloy, and plastic, which is not specifically limited in the embodiments of the present application. In some embodiments, the inner side of the end cover 201 may also be provided with an insulating member, and the insulating member may be configured to isolate an electrical connection component in the housing body 202 from the end cover 201 to reduce the risk of short circuits. Illustratively, the insulating member may be made of plastic, rubber, or the like.

The housing body 202 is a component configured to form the internal environment of the battery cell 200 in combination with the end cover 201. The formed internal environment may be used to accommodate the battery cell assembly 203, the electrolyte, and other components. The housing body 202 and the end cover 201 may be independent components. An opening may be formed in the housing body 202, and at the opening, the end cover 201 lids the opening to form the internal environment of the battery cell 200. Without limitation, the end cover 201 and the housing body 202 may also be integrated. Specifically, the end cover 201 and the housing body 202 may form a common connecting surface before other components are placed in the housing body, and when the interior of the housing body 202 needs to be encapsulated, the housing body 202 is lidded with the end cover 201. The housing body 202 may be in various shapes and sizes, such as a rectangular parallelepiped, a cylinder, and a hexagonal prism. Specifically, the shape of the housing body 202 may be determined based on the specific shape and size of the battery cell assembly 203. The housing body 202 may be made of various materials, such as copper, iron, aluminum, stainless steel, aluminum alloy, and plastic, which is not specially limited in the embodiments of the present application.

The housing body 202 includes two oppositely disposed first side surfaces and two oppositely disposed second side surfaces. The first side surfaces refer to two surfaces with an area smaller than that of the second side surfaces, and the second side surfaces refer to two surfaces with an area larger than that of the first side surfaces. The housing body 202 further includes a bottom surface and a top surface. The top surface is a surface of the end cover 201 facing away from the housing body 202, and the bottom surface is a surface of the housing body 202 opposite to the end cover 201.

The battery cell assembly 203 is a component where the electrochemical reaction occurs in the battery cell 200. One or more battery cell assemblies 203 may be accommodated in the housing body 202. The battery cell assembly 203 is mainly formed by winding or stacking a positive electrode plate and a negative electrode plate, and a separator is generally provided between the positive electrode plate and the negative electrode plate. The portions of the positive electrode plate and the negative electrode plate that contain active substances constitute a main body part of the battery cell assembly 203, and the portions of the positive electrode plate and the negative electrode plate that do not contain the active substances each constitute a tab. The positive electrode tab and the negative electrode tab may be located together at one end of the main body part or separately at two ends of the main body part. During the charging and discharging of the battery, the positive electrode active substance and the negative electrode active substance react with the electrolyte, and the tab is connected to the post terminal 2011 to form a current circuit.

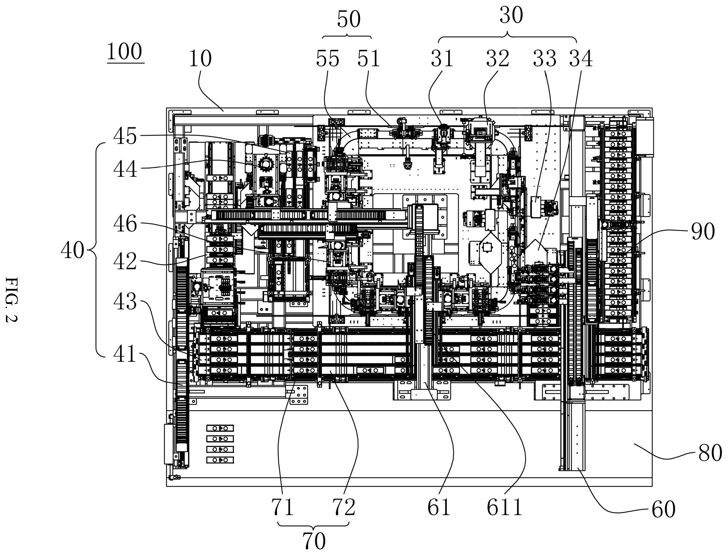

According to some embodiments of the present application, referring to FIG. 2, FIG. 2 is a schematic view of the inspection device 100 according to some embodiments of the present application.

The inspection device 100 includes a first inspection module 20, a second inspection module 30, a loading module 40, carrier assemblies 50, and an unloading module 60. The first inspection module 20 and the second inspection module 30 are respectively configured to inspect different parts of a battery cell 200; the loading module 40 is configured to acquire and transfer battery cells 200, and the loading module 40 can drive the battery cells 200 to pass through the first inspection module 20; a carrier assembly 50 is configured to receive the battery cell 200 transferred from the loading module 40, and the carrier assembly 50 is configured to convey the battery cell 200 to pass through the second inspection module 30; the unloading module 60 is configured to acquire and transfer the battery cell 200 transported from the carrier assembly 50.

A frame 10 refers to a member capable of providing a base for fixing the first inspection module 20, the second inspection module 30, the loading module 40, the carrier assemblies 50, the unloading module 60, and other structures and units. The frame 10 may be of a frame structure, a case structure, or other structures. The frame 10 may be made of metal, an alloy, a composite material, or other materials.

The first inspection module 20 and the second inspection module 30 refer to a combination of inspection units capable of inspecting different parts of the battery cell 200. For example, the first inspection module 20 may include cameras, sensors, or other inspection units, and the second inspection module 30 may also include cameras, sensors, or other inspection units.

The inspection parts of the battery cell 200 include two oppositely disposed first side surfaces, two oppositely disposed second side surfaces, a bottom surface, and a top surface. The inspection parts of the battery cell 200 further include structures such as a post terminal 2011 and an anti-explosion valve 2012, and the first inspection module 20 and the second inspection module 30 are respectively configured to inspect different parts. In some embodiments, the first inspection module 20 may be configured to inspect the two first side surfaces and the bottom surface, and the second inspection module 30 is configured to inspect the two second side surfaces, the top surface, the post terminal 2011, and the anti-explosion valve 2012. In some other embodiments, the first inspection module 20 may also be configured to inspect other parts. In this case, the second inspection module 30, in contrast to the first inspection module 20, may also be configured to inspect other parts of the battery cell 200 that are not inspected.

The loading module 40 refers to a structure or a combination of structures capable of acquiring and transferring battery cells 200 to be inspected, and the loading module 40 may include a robotic arm, a clamp, a trolley, a conveyor belt, or other structures; the battery cells 200 acquired by the loading module 40 may come from the previous process on an assembly line, and may be provided by an operator or an external device; the number of battery cells 200 transferred by the loading module 40 at a time may be one, two, or more; the loading module 40 is configured to transfer the battery cells 200 to the carrier assemblies 50, the movement trajectory of the battery cells 200 during the transfer process by the loading module 40 may be in the form of a straight line, an arc, or other regular shapes, or may be in the form of an L-shape, a U-shape, or other irregular shapes, and the specific movement trajectory of the battery cells 200 may be designed according to the space requirements of the inspection device 100, the arrangement between the modules, and other conditions, and implemented by the loading module 40.

During the process of transferring the battery cells 200 by the loading module 40, the loading module 40 enables the battery cells 200 to pass through the first inspection module 20, and the battery cells 200 can be inspected by the first inspection module 20 during the process of passing through the first inspection module 20.

The carrier assembly 50 refers to a structure or a combination of structures capable of accepting the battery cell 200, and the carrier assembly 50 may include a trolley, a clamp, a movement track, or other structures; the battery cell 200 acquired by the carrier assembly 50 come from the loading module 40; the carrier assembly 50 is configured to convey the battery cell 200 and enable the battery cell 200 to pass through the second inspection module 30; the number of battery cells 200 conveyed by the carrier assembly 50 at a time may be one, two, or more; the movement trajectory of the battery cell 200 during the conveying process of the carrier assembly 50 may be in the form of a straight line, an arc, or other trajectory shapes, or may be in the form of a circle, a square, or other irregular shapes, and the specific movement trajectory of the battery cell 200 may be designed according to the space requirements of the inspection device 100, the arrangement between the modules, and other conditions, and implemented by the carrier assembly 50.

After acquiring the battery cell 200, the carrier assembly 50 can drive the battery cell 200 to move and enable the battery cell 200 to pass through the second inspection module 30, and the battery cell 200 can be inspected by the second inspection module 30 during the process of passing through the second inspection module 30.

The unloading module 60 refers to a structure or a combination of structures capable of acquiring and transferring the battery cells 200, and the unloading module 60 may include a robotic arm, a clamp, a trolley, a conveyor belt, or other structures; the battery cells 200 acquired by the unloading module 60 come from the carrier assemblies 50; that is, the unloading module 60 can acquire the battery cells 200 from the carrier assemblies 50; the number of battery cells 200 transferred by the unloading module 60 at a time may be one, two, or more; the unloading module 60 is also configured to transfer the battery cells 200 from the carrier assemblies 50 to other positions, such that the operator can acquire the battery cells 200 at the other positions, or can set conveyor structures at the other positions, so as to facilitate the conveying of the battery cells 200 to other positions.

Since each battery cell 200 is provided with a unique identifier, after the inspections by both the first inspection module 20 and the second inspection module 30 are completed, the inspection device 100 can obtain the qualification information of each battery cell 200, the qualification information records whether the corresponding battery cell 200 is qualified, and can associate the qualification information of the battery cell 200 with the corresponding unique identifier. The unique identifier of the battery cell 200 may be a QR code, a barcode, or other identifiers. In some embodiments, the unloading module 60 can transfer qualified battery cells 200 and unqualified battery cells 200 to different positions according to the qualification information to achieve automated sorting. In some other embodiments, the inspection device 100 can display whether each battery cell 200 is qualified according to the qualification information, and the operator can manually perform sorting based on the displayed information.

It can be understood that the inspection device 100 should further include other modules or structures, such as a power supply module and a control module. The first inspection module 20, the second inspection module 30, the loading module 40, the carrier assemblies 50, and the unloading module 60 can all be powered by the power supply module and controlled by the control module.

In the embodiments, various inspection units in the inspection device 100 are separately configured as the first inspection module 20 and the second inspection module 30, such that the loading module 40 can pass through the first inspection module 20 during the process of transferring the battery cells 200, and the first inspection module 20 can inspect the passing battery cells 200 during this process, thereby reducing the time required for the inspection of the battery cells 200 on the carrier assemblies 50, optimizing the structural arrangement, and improving the inspection efficiency.

In some embodiments, the inspection device 100 further includes the frame 10. The frame 10 refers to a member capable of providing a base for fixing the first inspection module 20, the second inspection module 30, the loading module 40, the carrier assemblies 50, the unloading module 60, and other structures and units. The frame 10 may be of a frame structure, a case structure, or other structures. The frame 10 may be made of metal, an alloy, a composite material, or other materials.

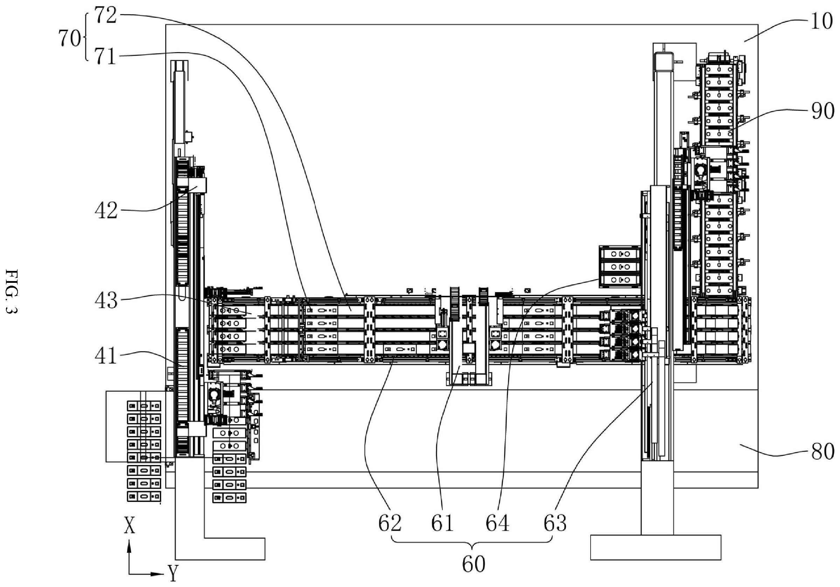

According to some embodiments of the present application, referring to FIGs. 2 and 3, FIG. 2 is a schematic view of the inspection device 100 according to some embodiments of the present application, and FIG. 3 is a schematic view of the loading module 40, the unloading module 60, and related mechanisms in the inspection device 100 according to some embodiments of the present application.

In some embodiments of the present application, the inspection device 100 further includes a first discharge port and a second discharge port, and the unloading module 60 is further configured to transfer the battery cells 200 to a first discharge port or a second discharge port. That is, in this case, the unloading module 60 is also provided with a sorting function. For example, the unloading module 60 can transfer the qualified battery cells 200 to the first discharge port and can transfer the unqualified battery cells 200 to the second discharge port.

The first discharge port refers to a discharge position of the inspection device 100, to which the unloading module 60 can transfer the battery cells 200. A conveyor belt, a trolley, or other structures may be disposed at the first discharge port to convey the battery cells 200 to the next process, and the battery cells 200 at the first discharge port may also be collected by the operator.

The second discharge port refers to another discharge position of the inspection device 100, to which the unloading module 60 can transfer the battery cells 200. A conveyor belt, a trolley, or other structures may be disposed at the second discharge port to convey the battery cells 200 to the next process, and the battery cells 200 at the second discharge port may also be collected by the operator.

In the embodiments, the unloading module 60 can separately transfer the battery cells 200 to the first discharge port and the second discharge port, such that the inspection device 100 can separately output the qualified battery cells 200 and the unqualified battery cells 200, thereby increasing the automation degree of the inspection device 100 and improving the inspection efficiency of the inspection device 100.

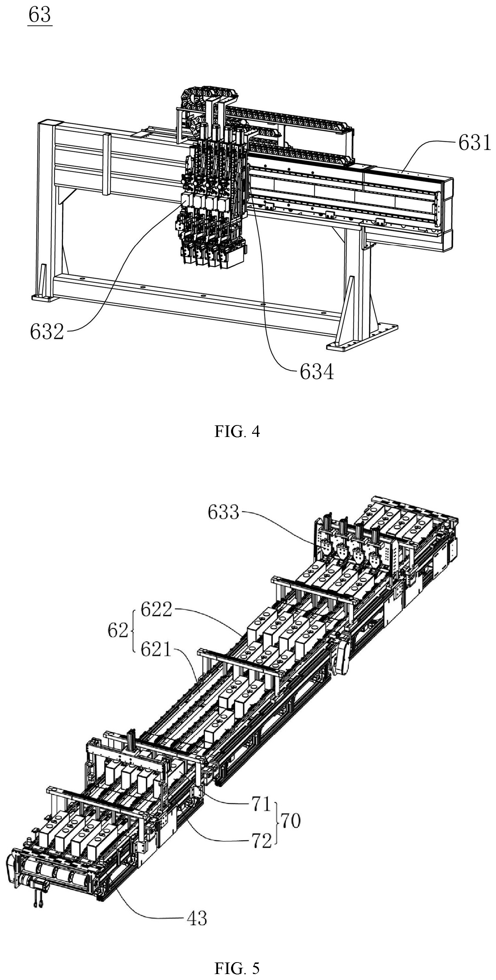

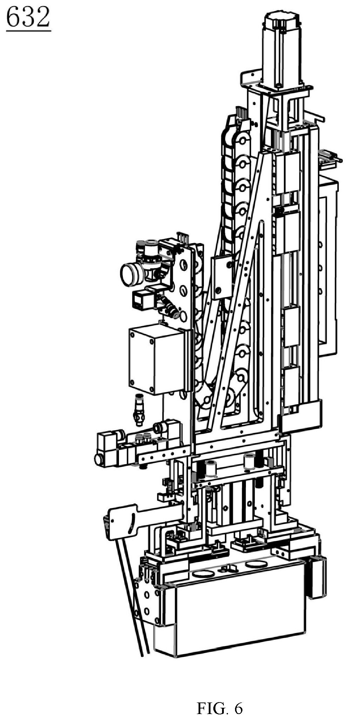

According to some embodiments of the present application, referring to FIGs. 3, 4, 5, and 6, FIG. 3 is a schematic view of the loading module 40, the unloading module 60, and related mechanisms in the inspection device 100 according to some embodiments of the present application, FIG. 4 is a schematic three-dimensional view of an unloading sorting assembly 63 in the unloading module 60 according to some embodiments of the present application, FIG. 5 is a schematic three-dimensional view of an unloading conveyor assembly 62 and an unloading sorting blocking member 633 according to some embodiments of the present application, and FIG. 6 is a schematic three-dimensional view of a sorting gripper 632 in the unloading sorting assembly 63 according to some embodiments of the present application.

In some embodiments of the present application, the unloading module 60 includes an unloading transfer assembly 61, an unloading conveyor assembly 62, and an unloading sorting assembly 63. The unloading transfer assembly 61 is configured to acquire the battery cells 200 from the carrier assemblies 50 and transfer the battery cells 200 to the unloading conveyor assembly 62; the unloading conveyor assembly 62 is configured to enable the battery cells 200 transferred from the unloading transfer assembly 61 to pass through the unloading sorting assembly 63 and be conveyed to the second discharge port; the unloading sorting assembly 63 is configured to acquire the battery cells 200 from the unloading conveyor assembly 62 and transfer the battery cells 200 to the first discharge port.

The unloading transfer assembly 61 refers to a structure or a combination of structures capable of acquiring and transferring the battery cells 200, and the unloading transfer assembly 61 may include a robotic arm, a clamp, a trolley, a conveyor belt, or other structures; the battery cells 200 acquired by the unloading transfer assembly 61 come from the carrier assemblies 50; that is, the unloading transfer assembly 61 can acquire the battery cells 200 from the carrier assemblies 50; the unloading transfer assembly 61 can also transfer the acquired battery cells 200 to the unloading conveyor assembly 62.

The unloading conveyor assembly 62 refers to a structure or a combination of structures for acquiring the battery and conveying the battery cells 200, and the unloading conveyor assembly 62 may include a conveyor belt, a trolley, or other structures; the battery cells 200 acquired by the unloading conveyor assembly 62 come from the unloading transfer assembly 61; during the process of conveying the battery cells 200 by the unloading conveyor assembly 62, the battery cells 200 can pass through the unloading sorting assembly 63 and finally be conveyed to the second discharge port.

The unloading sorting assembly 63 refers to a structure or a combination of structures capable of acquiring and transferring the battery cells 200, and the unloading sorting assembly 63 may include a robotic arm, a clamp, a trolley, a conveyor belt, or other structures; the battery cells 200 acquired by the unloading sorting assembly 63 come from the unloading conveyor assembly 62; that is, during the process of conveying the battery cells 200 to the second discharge port by the unloading conveyor assembly 62, the unloading sorting assembly 63 can acquire the battery cells 200 from the unloading conveyor assembly 62; the unloading sorting assembly 63 can also transfer the acquired battery cells 200 to the first discharge port.

**In** some embodiments, during the process of conveying the battery cells 200 to the second discharge port by the unloading conveyor assembly 62, the unloading sorting assembly 63 can acquire the qualified battery cells 200 from the unloading conveyor assembly 62 and transfer the qualified battery cells 200 to the first discharge port, and the battery cells 200 conveyed to the second discharge port by the unloading conveyor assembly 62 are all unqualified products.

The unloading module 60 achieves the technical effect of sorting the battery cells 200 by providing the unloading conveyor assembly 62 and the unloading sorting assembly 63. In addition, the unloading conveyor assembly 62 can also achieve the effect of intermediate transfer and temporary storage of the battery cells 200 by adjusting parameters of the unloading conveyor assembly 62 such as the conveying distance and the conveying speed.

The three assemblies, i.e., the unloading transfer assembly 61, the unloading conveyor assembly 62, and the unloading sorting assembly 63, decompose the processes of unloading and sorting. Specifically, the unloading transfer assembly 61 is configured to transfer the battery cells 200 from the carrier assemblies 50 to the unloading conveyor assembly 62, the unloading conveyor assembly 62 is configured to convey the battery cells 200 to the second discharge port, and the unloading sorting assembly 63 is configured to transfer the battery cells 200 from the unloading conveyor assembly 62 to the first discharge port. Compared with the unloading process achieved by a complex structure, this arrangement enables the operation of each assembly to be relatively simple, and the three assemblies can operate synchronously, thereby enabling the inspection device 100 to have a faster inspection takt, improving the inspection efficiency, and also facilitating the setting of different inspection takts as required.

The embodiments provide some structures in the unloading module 60. The unloading transfer assembly 61 is configured to transfer the battery cells 200 to the unloading conveyor assembly 62, the unloading conveyor assembly 62 is configured to finally convey the battery cells 200 to the second discharge port, and the unloading sorting assembly 63 can acquire the qualified battery cells 200 during this process, such that the battery cells 200 at the second discharge port are all unqualified products, and the unloading module 60 is capable of sorting the qualified battery cells 200 and the unqualified battery cells 200. In addition, the unloading conveyor assembly 62 can also serve as an intermediate transfer for the battery cells 200, such that the fluency of the operation of the unloading module 60 is improved, so as to better design the cycle time of the inspection device 100.

In some embodiments of the present application, the unloading conveyor assembly 62 includes at least two unloading conveyor belts 621, and the unloading conveyor belts 621 receive the battery cells 200 transferred from the unloading assembly and are configured to convey the battery cells 200 to the second discharge port.

The unloading conveyor belt 621 refers to a conveyor belt structure capable of carrying and conveying the battery cell 200. The unloading conveyor belt 621 may include a polyvinyl chloride (PVC) conveyor belt, a belt-type conveyor belt, a chain-plate conveyor belt, or other conveyor belts.

During the production process of the battery cells 200, since a plurality of battery cells 200 are generally transferred in groups among different production devices, the number of unloading conveyor belts 621 is at least two. This enables the inspection device 100 to output the plurality of battery cells 200 at a time to meet the production requirements. In addition, this also helps improve the conveying efficiency of the unloading conveyor assembly 62.

The parameters of the unloading conveyor belt 621 such as the conveying distance and the conveying speed are affected by the transfer frequency of the unloading transfer assembly 61, such that when the unloading transfer assembly 61 transfers the battery cells 200 to the unloading conveyor belt 621, the battery cells 200 being transferred may not collide with other battery cells 200, thereby reducing possible collision damage that may occur during the inspection process of the battery cells 200 and also reducing the occurrence of safety accidents such as fire or explosion that may result from collisions between the battery cells 200. The parameters of the unloading conveyor belt 621 such as the conveying distance and the conveying speed are also affected by the transfer frequency of the unloading sorting assembly 63, such that the unloading sorting assembly 63 can acquire the battery cells 200 from the unloading conveyor belt 621 each time, thereby reducing the cases in which the unloading sorting assembly 63 is idle and improving the inspection efficiency and device utilization.

In some embodiments, the number of the unloading conveyor belts 621 may be consistent with the number of battery cells 200 transferred by the unloading transfer assembly 61 at a time; in some other embodiments, the number of the unloading conveyor belts 621 may also be greater than the number of the battery cells 200 transferred by the unloading transfer assembly 61 at a time.

In some embodiments, the maximum number of the battery cells 200 that can be transferred by the unloading sorting assembly 63 at a time may be consistent with the number of the unloading conveyor belts 621.

The embodiments provide some structures of the unloading conveyor assembly 62, and a plurality of unloading conveyor belts 621 are provided to simultaneously convey the battery cells 200, thereby further improving the efficiency.

In some embodiments of the present application, the at least two unloading conveyor belts 621 are sequentially disposed in a first direction, the unloading conveyor belts 621 are provided with unloading positions 622, and the unloading positions 622 on different unloading conveyor belts 621 are sequentially disposed in a second direction; the first direction is perpendicular to the second direction, and the second direction is parallel to an extension direction of the unloading conveyor belt 621.

The unloading position 622 refers to a position on the unloading conveyor belt 621 for placing the battery cell 200. During the process of transferring the battery cell 200 to the unloading conveyor belt 621 by the unloading transfer assembly 61, the unloading transfer assembly 61 can transfer the battery cell 200 to the unloading position 622 of the unloading conveyor belt 621; the unloading position 622 does not move with the operation of the unloading conveyor belt 621; that is, after the battery cell 200 is transferred to the unloading position 622 of the unloading conveyor belt 621, the operation of the unloading conveyor belt 621 may cause the battery cell 200 to leave the corresponding unloading position 622, thereby leaving the unloading position 622 empty, so as to facilitate the transfer of another battery cell 200 to the unloading position 622.

In some embodiments, the unloading position 622 may only refer to a position defined in space; in some other embodiments, a member capable of limiting the position of the battery cell 200 may also be disposed above the unloading conveyor belt 621 to form the unloading position 622, and in this case, the battery cell 200 should be capable of moving with the operation of the unloading conveyor belt 621 and leave the unloading position 622.

Referring to FIG. 3, the first direction is a direction in which an X axis is located in the figure, and the second direction is a direction in which a Y axis is located in the figure.

The unloading conveyor belts 621 being sequentially disposed in the first direction means that at least two unloading conveyor belts 621 are disposed side by side in the first direction; the second direction being parallel to the extension direction of the unloading conveyor belt 621 means that the operation of the unloading conveyor belts 621 can drive the battery cells 200 to move in the second direction.

Since there are at least two unloading conveyor belts 621, and each unloading conveyor belt 621 is provided with one unloading position 622, the unloading positions 622 are sequentially disposed in the first direction. In addition, the unloading positions 622 are also sequentially disposed in the second direction. That is, the at least two unloading positions 622 are obliquely staggered, thereby ensuring that no unloading positions 622 overlap in either the first direction or the second direction.

In some embodiments, referring to FIG. 3, the unloading conveyor assembly 62 includes four unloading conveyor belts 621, and in a direction from near to far relative to the carrier assemblies 50, the four unloading conveyor belts 621 are sequentially referred to as a first conveyor belt, a second conveyor belt, a third conveyor belt, and a fourth conveyor belt. Correspondingly, the unloading positions 622 on the four unloading conveyor belts 621 are referred to as a first unloading position, a second unloading position, a third unloading position, and a fourth unloading position, respectively, and the four unloading conveyor belts 621 all convey the battery cells 200 in a direction from left to right. In this case, the first unloading position 622 is on the right side of the second unloading position 622, the second unloading position 622 is on the right side of the third unloading position 622, and the third unloading position 622 is on the right side of the fourth unloading position 622. With the operation of the four unloading conveyor belts 621, there are always no battery cells 200 between the four unloading positions 622 and the carrier assemblies 50.

Since collisions of the battery cells 200 may cause damage to the battery cells 200, and collisions between the battery cells 200 may also lead to the occurrence of safety accidents such as fire or explosion, the unloading transfer assembly 61 should reduce the occurrence of crossing over the battery cells 200 during the process of transferring the battery cells 200, thereby reducing the occurrence of collisions of the battery cells 200 caused by the battery cells 200 falling during the process of crossing over the battery cells 200.

During the process of transferring the battery cells 200 by the unloading transfer assembly 61, the case of crossing over the battery cells 200 refers to a situation in which the battery cells 200 being transferred pass over other battery cells 200 located on the unloading conveyor belts 621 from above; during this process, if the battery cells 200 being transferred fall, collisions between the battery cells 200 may occur.

Accordingly, in the embodiments, the unloading positions 622 are disposed on the unloading conveyor belts 621, and the unloading positions 622 on different unloading conveyor belts 621 are disposed in a staggered manner, such that during the process of transferring the battery cells 200 to the unloading conveyor belts 621 by the unloading transfer assembly 61, other battery cells 200 are not prone to appear below the battery cells 200 being transferred, thereby reducing the occurrence of safety accidents caused by the battery cells 200 falling, and improving the safety performance of the inspection device 100.

In some embodiments of the present application, the unloading transfer assembly 61 includes unloading variable-pitch grippers 611, and the unloading variable-pitch grippers 611 are configured to transfer the battery cells 200 from the carrier assemblies 50 to different unloading positions 622.

The unloading variable-pitch gripper 611 refers to a structure or a combination of structures capable of causing different battery cells 200 to move different distances. During the process of transferring the battery cells 200 by the unloading transfer assembly 61 at a time, the distances between each unloading position 622 and the carrier assembly 50 are different from one another. Correspondingly, the unloading variable-pitch gripper 611 can cause different battery cells 200 to move different distances.

In some embodiments, the unloading variable-pitch gripper 611 may include a plurality of grippers having different strokes, and each gripper is configured to acquire one battery cell 200. During a single transfer process of the unloading transfer assembly 61, the plurality of grippers operate simultaneously but have different strokes, such that the plurality of grippers can simultaneously acquire the battery cells 200 and can simultaneously transfer the battery cells 200 to different unloading positions 622. In some other embodiments, the unloading variable-pitch gripper 611 may also include a plurality of grippers having the same stroke, and in this case, the time at which each gripper opens and releases the battery cell 200 is different; that is, the plurality of grippers simultaneously acquire the battery cells 200 and synchronously operate with the same stroke, but the plurality of grippers open sequentially and transfer the battery cells 200 to the corresponding unloading positions 622. In yet other embodiments, the unloading variable-pitch grippers 611 may also transfer the battery cells 200 to different unloading positions 622 through other structures.

In some embodiments, the number of the grippers in the unloading variable-pitch gripper 611 is the same as the number of the unloading conveyor belts 621, such that during a single transfer process of the unloading variable-pitch gripper 611, each gripper can transfer one battery cell 200 to the corresponding unloading conveyor belt 621.

Different unloading positions 622 are disposed in a staggered manner; that is, the distances between the unloading positions 622 and the carrier assemblies 50 are different. Therefore, in the embodiments, the unloading variable-pitch grippers 611 simultaneously obtain the battery cells 200 from the carrier assemblies 50 and simultaneously transfer the battery cells 200 to different unloading positions 622, such that the battery cells 200 can remain synchronized during the transfer process, so as to design the takt time of this step and improve the safety performance of the inspection device 100 in coordination with the operation of the unloading conveyor belts 621.

In some embodiments, the unloading transfer assembly 61 includes an unloading transfer support, and the unloading variable-pitch gripper 611 further includes a variable-pitch base movably disposed on the unloading transfer support. For example, the variable-pitch base is capable of moving up and down to remove the battery cells 200 from the carrier assemblies 50, or to place the battery cells 200 into the unloading positions 622; the variable-pitch base may be driven by a pneumatic cylinder, a hydraulic cylinder, or other units.

The variable-pitch base is provided with a plurality of grippers, and each gripper is controlled by a different feeding unit, such that different grippers have different strokes. The feeding unit may be a pneumatic cylinder, a hydraulic cylinder, or other units.

In some embodiments of the present application, the unloading module 60 further includes a buffer assembly 64, the unloading sorting assembly 63 can transfer the battery cells 200 to the buffer assembly 64, and the unloading sorting assembly 63 can transfer the battery cells 200 from the buffer assembly 64 to the unloading conveyor assembly 62.

The buffer assembly 64 refers to a structure or a combination of structures for temporarily storing the battery cells 200; the buffer assembly 64 may include a storage platform, a holding bin, or other structures; the battery cells 200 stored by the buffer assembly 64 come from the unloading sorting assembly 63; the buffer assembly 64 may be disposed on a side of the unloading conveyor belt 621 or at other positions. To reduce the time for a single transfer by the unloading sorting assembly 63, the distance between the buffer assembly 64 and the unloading conveyor belt 621 as well as the first discharge port should be small.

Since the unloading conveyor assembly 62 is configured to convey the battery cells 200 to the unloading sorting assembly 63 and to convey the unqualified battery cells 200 to the second discharge port, and the unloading sorting assembly 63 is configured to transfer the qualified battery cells 200 to the first discharge port, the number of battery cells 200 acquired by the unloading sorting assembly 63 during each process of transferring the qualified battery cells 200 may be different, resulting in that the number of qualified battery cells 200 output by the inspection device 100 each time may be different, which may affect the subsequent operation of other devices.

Accordingly, to ensure that the number of battery cells 200 transferred to the first discharge port by the unloading sorting assembly 63 each time is the same, the embodiments provide the buffer assembly 64. The sorting assembly can first transfer an insufficient number of battery cells 200 to the buffer assembly 64 for pre-storage, or the sorting assembly can acquire the pre-stored qualified battery cells 200 from the buffer assembly 64 to make up the number, such that the number of battery cells 200 finally transferred to the first discharge port by the unloading sorting assembly 63 is the same.

In some embodiments, the buffer assembly 64 includes a plurality of buffer positions, and the buffer positions are configured to accommodate the battery cells 200.

The buffer position refers to a position on the buffer assembly 64 for accommodating the battery cell 200. The buffer position may be a position defined in space, or a physical structure may be disposed on the buffer assembly to define the specific position of the buffer position. In some embodiments, the buffer assembly 64 includes a storage platform, a plurality of protruding ribs are provided in the storage platform in a protruding manner, and the plurality of protruding ribs enclose the buffer positions, such that the battery cells 200 can be placed in the buffer positions enclosed by the plurality of protruding ribs.

Since the maximum number of battery cells 200 that can be acquired by the unloading sorting assembly 63 at a time is the same as the number of the unloading conveyor belts 621, the number of battery cells 200 output at the first discharge port each time is the same as the number of the unloading conveyor belts 621. In some embodiments, the number of the buffer positions may be one less than the number of the unloading conveyor belts 621, such that the number of battery cells 200 transferred to the first discharge port by the unloading sorting assembly 63 each time is consistent. Specifically, the unloading sorting assembly 63 may not only transfer the battery cells 200 on the unloading conveyor assembly 62 to the buffer assembly 64, but also transfer the battery cells 200 on the buffer assembly 64 to the unloading conveyor assembly 62, such that the number of the battery cells 200 on the unloading conveyor assembly 62 is the number of battery cells 200 that should be output from the first discharge port, and in this case, the unloading sorting assembly 63 then transfers the battery cells 200 from the unloading conveyor assembly 62 and transfer the battery cells to the first discharge port; in some other embodiments, the number of the buffer positions may also be greater than or equal to the number of the unloading conveyor belts 621.

In some embodiments, there are four unloading conveyor belts 621, and the number of battery cells 200 output from the first discharge port each time is also four, and in this case, there are three buffer positions on the buffer assembly 64; when there are four qualified battery cells 200 on the unloading conveyor assembly 62, the unloading sorting assembly 63 can directly transfer the four battery cells 200 to the first discharge port; when there are three qualified battery cells 200 on the unloading conveyor assembly 62 and there are no battery cells 200 on the buffer assembly 64, the unloading sorting assembly 63 can transfer the three battery cells 200 to the buffer assembly 64; when there are three qualified battery cells 200 on the unloading conveyor assembly 62 and there are battery cells 200 on the buffer assembly 64, the unloading sorting assembly 63 can transfer one battery cell 200 on the buffer assembly 64 to the unloading conveyor assembly 62, and in this case, there are four qualified battery cells 200 on the unloading conveyor assembly 62, and the unloading sorting assembly 63 can transfer the four battery cells 200 to the first discharge port; when there are two qualified battery cells 200 on the unloading conveyor assembly 62 and there are no battery cells 200 on the buffer assembly 64, the unloading sorting assembly 63 can transfer the two qualified battery cells 200 to the buffer assembly 64; when there are two qualified battery cells 200 on the unloading conveyor assembly 62 and there is one battery cell 200 on the buffer assembly 64, the unloading sorting assembly 63 can transfer the two battery cells 200 to the buffer assembly 64; when there are two qualified battery cells 200 on the unloading conveyor assembly 62 and there are two or three battery cells 200 on the buffer assembly 64, the unloading sorting assembly 63 can transfer the two battery cells 200 on the buffer assembly 64 to the unloading conveyor assembly 62, and in this case, there are four qualified battery cells 200 on the unloading conveyor assembly 62, and the unloading sorting assembly 63 can transfer the four battery cells 200 to the first discharge port; when there is one qualified battery cell 200 on the unloading conveyor assembly 62 and there is at least one empty buffer position on the buffer assembly 64, the unloading sorting assembly 63 can transfer the battery cell 200 to the buffer assembly 64; when there is one qualified battery cell 200 on the unloading conveyor assembly 62 and three battery cells 200 on the buffer assembly 64, the unloading sorting assembly 63 can transfer the three battery cells 200 on the buffer assembly 64 to the unloading conveyor assembly 62, and in this case, there are four qualified battery cells 200 on the unloading conveyor assembly 62, and the unloading sorting assembly 63 can transfer the four battery cells 200 to the first discharge port.

It can be understood that since the number of battery cells 200 that need to be output from the first discharge port at a time is limited, the cases that need to be handled by the unloading sorting assembly 63 are also limited, the control module that controls the inspection device 100 can control the unloading sorting assembly 63 to perform various corresponding operations according to different cases.

In the embodiments, a plurality of buffer positions are disposed on the buffer assembly 64, such that the buffer assembly 64 can adapt to various cases corresponding to different numbers of qualified battery cells 200.

In some embodiments of the present application, the unloading sorting assembly 63 includes a sorting support 631 and sorting grippers 632; the sorting support 631 is disposed on the frame 10; the sorting grippers 632 are movably disposed on the sorting support 631, the sorting grippers 632 can transfer the battery cells 200 from the unloading conveyor belts 621 to the buffer assembly 64 or the first discharge port, and the sorting grippers 632 can transfer the battery cells 200 from the buffer assembly 64 to the unloading conveyor belts 621.

The sorting support 631 refers to a structure or a combination of structures for providing a base for fixing the sorting grippers 632; the sorting support 631 may be of a frame structure, a plate-shaped structure, a block-shaped structure, or structures in other shapes; the sorting support 631 is disposed on the frame 10 and is configured to provide a base for fixing the sorting grippers 632.

The sorting gripper 632 refers to a structure or a combination of structures capable of acquiring and releasing the battery cell 200; the sorting gripper 632 may include a robotic arm, or may include a clamp or other structures capable of acquiring the battery cell 200; the sorting gripper 632 can transfer the battery cell 200 from the unloading conveyor belt 621 to the buffer assembly 64, the sorting gripper 632 can also transfer the battery cell 200 from the buffer assembly 64 to the unloading conveyor belt 621, and the sorting gripper 632 can also transfer the battery cell 200 from the unloading conveyor belt 621 to the first discharge port. Accordingly, the sorting gripper 632 can move along the sorting support 631 to drive the battery cell 200 to move between the unloading conveyor belt 621 and the buffer assembly 64 as well as the first discharge port, and the sorting gripper 632 can also move up and down to place the battery cell 200 or drive the battery cell 200 to be lifted, so as to facilitate transfer.

The number of the sorting grippers 632 and the number of the unloading conveyor belts 621 may be the same or different.

Each sorting gripper 632 can only acquire one battery cell 200 at a time and drive it to move. A plurality of sorting grippers 632 can operate synchronously or independently, so as to flexibly transfer the battery cells 200 to the unloading conveyor belts 621, the buffer assembly 64, or the first discharge port.

In some embodiments, the unloading sorting assembly 63 further includes sorting bases 634, the sorting bases 634 are movable along the sorting support 631, and the movement of the sorting bases 634 can be achieved through a rodless cylinder, a screw rod-slider structure, or other structures; the sorting grippers 632 are disposed on the sorting bases 634, and each sorting gripper 632 corresponds to one sorting base 634. The sorting gripper 632 is capable of moving up and down relative to the sorting base 634, and the sorting gripper 632 can be enabled to move up and down through a pneumatic cylinder, a hydraulic cylinder, or other structures.

The embodiments provide some structures of the unloading sorting assembly 63 to separately grip the battery cells 200 by a plurality of independent sorting grippers 632, so as to acquire the qualified battery cells 200 in the unloading conveyor assembly 62 and avoid the unqualified battery cells 200, thereby achieving the sorting effect. In addition, the independent sorting grippers 632 can also acquire the battery cells 200 from the buffer positions according to the number of qualified battery cells 200, such that the number of battery cells 200 transferred to the first discharge port by the unloading sorting assembly 63 can be consistent.

In some embodiments, the number of the sorting grippers 632 is the same as the number of the unloading conveyor belts 621, and the sorting grippers 632 are opposite to the corresponding unloading conveyor belts 621. In this case, when the number of qualified battery cells 200 on the unloading conveyor assembly 62 meets the number of battery cells 200 that should be output by the inspection device 100, the plurality of sorting grippers 632 can transfer the battery cells 200 from the unloading conveyor assembly 62 to the first discharge port through a single operation.

In the embodiments, the number of the sorting grippers 632 is further defined, and the sorting grippers 632 are in one-to-one correspondence with the unloading conveyor belts 621, such that the sorting grippers 632 can independently acquire the qualified battery cells 200, thereby achieving the sorting effect.

In some embodiments of the present application, the unloading sorting assembly 63 further includes sorting blocking members 633, the sorting blocking members 633 are movably disposed on the sorting support 631, and the sorting blocking members 633 can block the unloading conveyor assembly 62 from conveying the battery cells 200 to the second discharge port.

The sorting blocking member 633 refers to a structure or a combination of structures capable of blocking the battery cell 200 from moving with the unloading conveyor belt 621; the sorting blocking member 633 may be a stop block, a stop bar, or other structures; the battery cell 200 blocked by the sorting blocking member 633 no longer moves with the unloading conveyor belt 621 and remains stationary relative to the frame 10, so as to enable the sorting gripper 632 to more accurately acquire the battery cell 200.

The sorting blocking members 633 may only be configured to block the qualified battery cells 200, such that the qualified battery cells 200 may not pass through the unloading sorting assembly 63 and be conveyed to the second discharge port; the sorting blocking members 633 may also be configured to block all the battery cells 200, and may not block the remaining battery cells 200 after the sorting grippers 632 acquire the qualified battery cells 200. Optionally, the time required for the sorting blocking members 633 to block the battery cells 200 and the sorting grippers 632 to acquire the battery cells 200 can be relatively short, thereby reducing the collisions of the battery cells 200 on the unloading conveyor belts 621.

The sorting blocking member 633 is movably disposed on the sorting support 631, and since the sorting blocking member 633 can both block the battery cell 200 and allow the battery cell 200 to pass, the sorting blocking member 633 can move relative to the sorting support 631 such that the sorting blocking member 633 is provided with at least a first position and a second position. When the sorting blocking member 633 is in the first position, the battery cell 200 is blocked, and when the sorting blocking member 633 is in the second position, the sorting blocking member 633 cannot block the battery cell 200.

The movement of the sorting blocking member 633 relative to the sorting support 631 may be a vertical movement or a telescoping motion in a horizontal direction. The sorting blocking member 633 may be driven by a pneumatic cylinder, a hydraulic cylinder, or other structures.

The unloading conveyor assembly 62 can finally convey the battery cells 200 to the second discharge port, and the unloading sorting assembly 63 can acquire the qualified battery cells 200 during this process, such that the battery cells 200 at the second discharge port are all unqualified products. Accordingly, the embodiments provide the sorting blocking members 633. During the process of conveying the battery cells 200 to the second discharge port by the unloading conveyor assembly 62, the qualified battery cells 200 are blocked by the sorting blocking members 633, such that the sorting grippers 632 can acquire the corresponding qualified battery cells 200, and the unloading conveyor assembly 62 can convey the unqualified battery cells 200 to the second discharge port, thereby achieving the effect of sorting the qualified battery cells 200 and the unqualified battery cells 200.

In some embodiments, the number of the sorting blocking members 633 is the same as the number of the unloading conveyor belts 621, and the sorting blocking members 633 are in one-to-one correspondence with the unloading conveyor belts 621.

The one-to-one correspondence between the sorting blocking members 633 and the unloading conveyor belts 621 means that each sorting blocking member 633 can block the battery cell 200 on each corresponding unloading conveyor belt 621.

In this case, the sorting blocking members 633 are only configured to block the qualified battery cells 200, and unqualified batteries can directly move with the unloading conveyor belts 621 to the second discharge port and are no longer blocked.

**In** the embodiments, the sorting blocking members 633 are in one-to-one correspondence with the unloading conveyor belts 621, such that the sorting blocking members 633 block the qualified battery cells 200 conveyed on the unloading conveyor belts 621, thereby assisting the unloading conveyor belts 621 and the sorting grippers 632 to achieve the sorting effect.

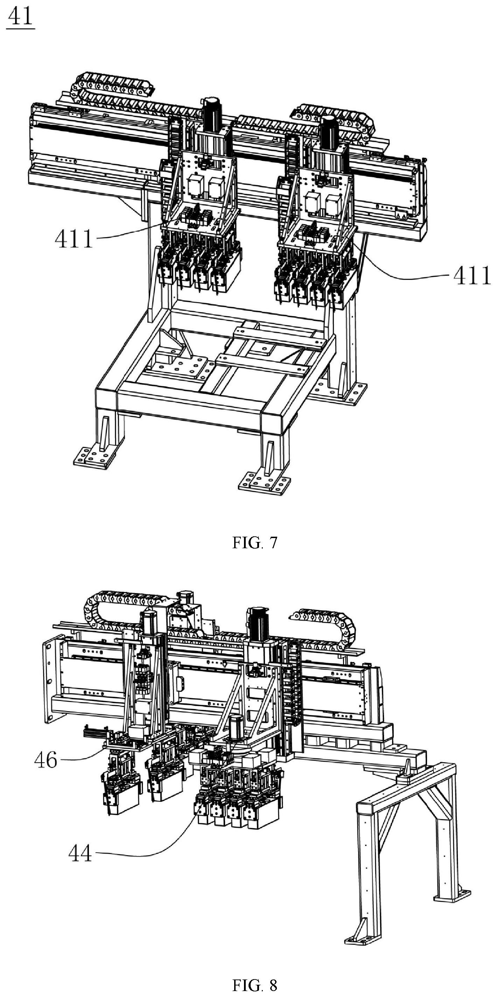

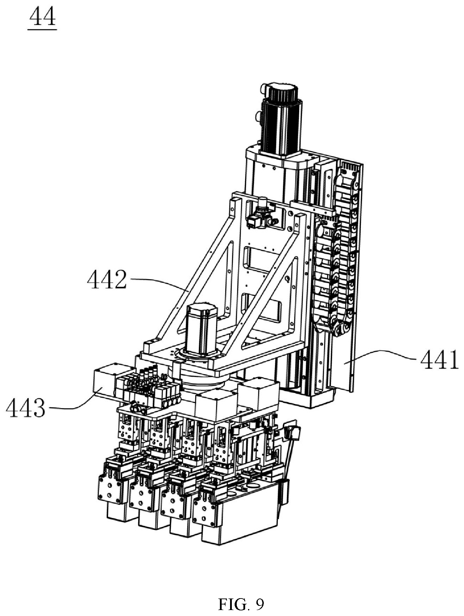

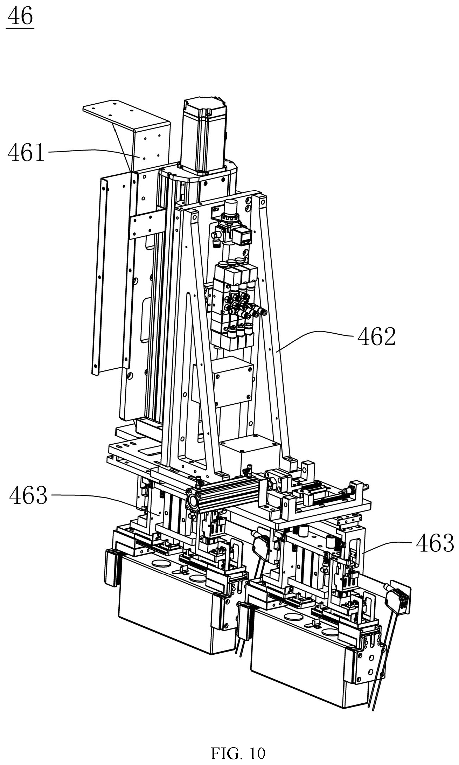

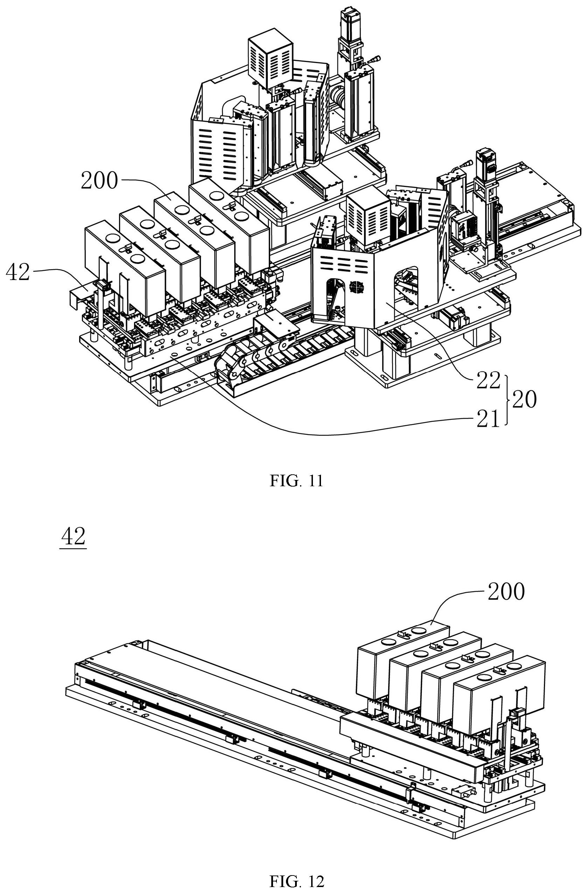

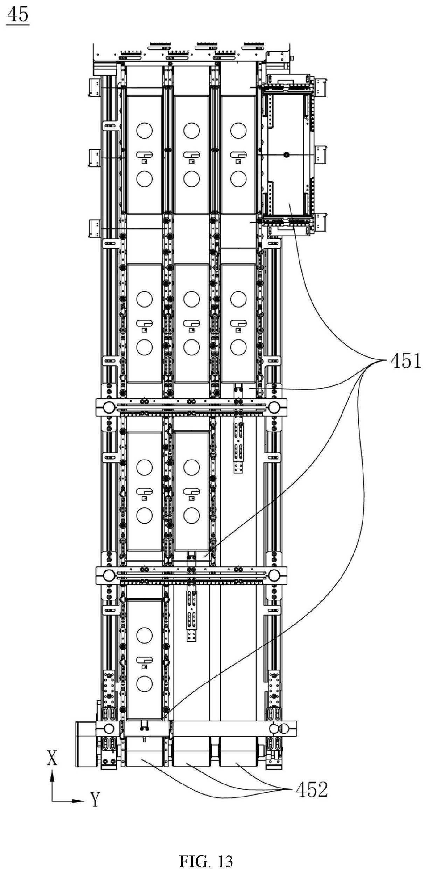

According to some embodiments of the present application, referring to FIG. 2 and further referring to FIGs. 7 to 13, FIG. 2 is a schematic view of the inspection device 100 according to some embodiments of the present application, FIG. 7 is a schematic three-dimensional view of a loading transfer assembly 41 in the loading module 40 according to some embodiments of the present application, FIG. 8 is a schematic three-dimensional view of a loading handling assembly 44 and a loading transport assembly 46 in the loading module 40 according to some embodiments of the present application, FIG. 9 is a schematic three-dimensional view of the loading handling assembly 44 in the loading module 40 according to some embodiments of the present application, FIG. 10 is a schematic three-dimensional view of the loading transport assembly 46 in the loading module 40 according to some embodiments of the present application, FIG. 11 is a schematic three-dimensional view of a loading conveyor assembly 42 in the loading module 40 according to some embodiments of the present application, FIG. 12 is another schematic three-dimensional view of the loading conveyor assembly 42 in the loading module 40 according to some embodiments of the present application, and FIG. 13 is a schematic view of a singulation assembly 45 in the loading module 40 according to some embodiments of the present application.

**In** some embodiments of the present application, the loading module 40 includes a loading transfer assembly 41, a loading conveyor assembly 42, and a loading transport assembly 46, the loading transfer assembly 41 is configured to acquire the battery cells 200 and transfer the battery cells 200 to the loading conveyor assembly 42, the loading conveyor assembly 42 is configured to acquire the battery cells 200 from the loading transfer assembly 41 and enable the battery cells 200 to pass through the first inspection module 20, and the loading transport assembly 46 is configured to acquire the battery cells 200 from the loading conveyor assembly 42 and transfer the battery cells 200 to the carrier assemblies 50.

The loading transfer assembly 41 refers to a structure or a combination of structures capable of acquiring and transferring the battery cells 200, and the loading transfer assembly 41 may include a robotic arm, a clamp, a trolley, a conveyor belt, or other structures; the battery cells 200 acquired by the loading transfer assembly 41 may come from the previous process on an assembly line, or may be provided by an operator or an external device; the loading transfer assembly 41 can also transfer the acquired battery cells 200 to the loading conveyor assembly 42, and the number of battery cells 200 transferred by the loading transfer assembly 41 at a time may be one, two, or more.

The loading conveyor assembly 42 refers to a structure or a combination of structures capable of acquiring the battery and conveying the battery cells 200, and the loading conveyor assembly 42 may include a conveyor belt, a trolley, or other structures; the battery cells 200 acquired by the loading conveyor assembly 42 come from the loading transfer assembly 41; during the process of conveying the battery cells 200 by the loading conveyor assembly 42, the battery cells 200 can pass through the first inspection module 20 and be inspected by the first inspection module 20, and during the process of inspecting the battery cells 200 by the first inspection module 20, the loading conveyor assembly 42 does not need to be stopped; that is, the first inspection module 20 can complete the inspection during the movement of the battery cells 200.

The loading transport assembly 46 refers to a structure or a combination of structures capable of acquiring and transferring the battery cells 200, and the loading transport assembly 46 may include a robotic arm, a clamp, a trolley, a conveyor belt, or other structures; the battery cells 200 acquired by the loading transport assembly 46 come from the loading conveyor assembly 42; that is, after the loading conveyor assembly 42 drives the battery cells 200 to pass through the first inspection module 20, the loading transport assembly 46 can acquire the battery cells 200 from the loading conveyor assembly 42; the loading transport assembly 46 can also transfer the acquired battery cells 200 to the carrier assemblies 50, and the number of battery cells 200 transferred by the loading transport assembly 46 at a time may be one, two, or more.

The loading transfer assembly 41, the loading conveyor assembly 42, and the loading transport assembly 46 may be sequentially arranged along a straight line, or may be arranged along an L-shape or other shapes as required; in some embodiments, the loading transfer assembly 41 and the loading conveyor assembly 42 are arranged along a straight line, the loading transport assembly 46 is disposed on a side of the loading conveyor assembly 42, and the loading transport assembly 46 is disposed between the loading conveyor assembly 42 and the carrier assembly 50.

The loading module 40 is provided with the loading conveyor assembly 42, such that the battery cells 200 can be partially inspected first during this process, thereby reducing the occurrence of a long cycle caused by a large number of inspection devices 100 performing centralized inspection on the battery cells 200, and also reducing the repeated setting of identical inspection unit.

The three assemblies, i.e., the loading transfer assembly 41, the loading conveyor assembly 42, and the loading transport assembly 46 decompose the loading process, and also insert some appearance inspection items during the loading process. Specifically, the loading transfer assembly 41 is configured to transfer the battery cells 200 to the loading conveyor assembly 42, the loading conveyor assembly 42 is configured to convey the battery cells 200 and accept the inspection of the first inspection module 20, and the loading transport assembly 46 is configured to transfer the battery cells 200 to the carrier assemblies 50. Compared with the loading achieved by a complex structure, this arrangement enables the operation of each assembly to be relatively simple, and the three assemblies can operate synchronously, thereby enabling the inspection device 100 to have a faster takt, improving the inspection efficiency, and also facilitating the setting of different inspection takts as required.

The embodiments provide some structures of the loading module 40. The loading transfer assembly 41 acquires the battery cells 200 and transfers the battery cells 200 to the loading conveyor assembly 42, and the loading conveyor assembly 42 drives the battery cells 200 to pass through the first inspection module 20, such that the first inspection module 20 inspects the passing battery cells 200. During the process of conveying the battery cells 200 by the loading conveyor assembly 42, the loading transfer assembly 41 can repeat the operation of acquiring the battery cells 200 again to improve the inspection efficiency, so as to better design the cycle time of the inspection device 100.

In some embodiments of the present application, the loading module 40 further includes an intermediate transfer assembly 43; the loading transfer assembly 41 includes two loading transfer grippers 411, either of which is configured to acquire the battery cell 200 and transfer the battery cell 200 to the intermediate transfer assembly 43, and the other of which is configured to acquire the battery cell 200 from the intermediate transfer assembly 43 and transfer the battery cell 200 to the loading conveyor assembly 42.

The intermediate transfer assembly 43 refers to a structure or a combination of structures for storing the battery cells 200, and the intermediate transfer assembly 43 may include a platform, a cavity, a conveyor belt, or other structures; the intermediate transfer assembly 43 may be configured to store the battery cells 200 transferred by the loading transfer assembly 41, and the number of battery cells 200 stored in the intermediate transfer assembly 43 may be one, two, or more.

The loading transfer gripper 411 refers to a structure or a combination of structures capable of acquiring and transferring the battery cell 200, the battery cell 200 acquired by the loading transfer gripper 411 may come from the previous process on an assembly line or an operator, and the battery cell 200 acquired by the loading transfer gripper 411 may also come from the intermediate transfer assembly 43; the loading transfer gripper 411 may include a robotic arm, a clamp, or other structures.

There are two loading transfer grippers 411, either of which is configured to transfer the battery cell 200 to the intermediate transfer assembly 43, and the other of which is configured to transfer the battery cell 200 from the intermediate transfer assembly 43 to the loading conveyor assembly 42.

The arrangement of the two loading transfer grippers 411 can further decompose the process of transferring the battery cells 200 to the loading conveyor assembly 42 by the loading transfer assembly 41. During the process of acquiring and transferring the battery cell 200 by one loading transfer gripper 411, the other loading transfer gripper 411 can move and acquire the battery cell 200 again, thereby further shortening the time for acquiring and transferring the battery cell 200 at a time, improving the efficiency, and further accelerating the inspection takt.

The embodiments further provide some structures of the loading module 40, and the loading transfer assembly 41 includes two loading transfer grippers 411, one of which can transfer the battery cell 200 to the intermediate transfer assembly 43, and the other one of which can transfer the battery cell 200 from the intermediate transfer assembly 43 to the loading conveyor assembly 42. The two loading transfer grippers 411 can operate simultaneously to further improve the inspection efficiency and reduce the intervals between operations, so as to better design the cycle time of the inspection device 100.

In some embodiments of the present application, the loading conveyor assembly 42 includes a conveyor track and a conveyor trolley capable of traveling along the conveyor track, and the conveyor trolley is configured to carry the battery cell 200 transferred from the loading transfer gripper 411; the units in the first inspection module 20 may be disposed on both sides of the conveyor track, such that the battery cell 200 can be inspected by the units in the first inspection module 20 during the process of the conveyor trolley driving the battery cell 200 to move.

The conveyor track may be in the form of a straight line, an arc, an L-shape, or other shapes; a clamp, a cavity, or other structures may be disposed on the conveyor trolley to fix the battery cell 200.

In some embodiments of the present application, the loading module 40 further includes a loading handling assembly 44 and a singulation assembly 45, and the loading handling assembly 44 is configured to acquire the battery cells 200 from the loading conveyor assembly 42 and transfer the battery cells 200 to the singulation assembly 45; the singulation assembly 45 is configured to accommodate the battery cells 200, and the loading transport assembly 46 can acquire the battery cells 200 from the singulation assembly 45.

The loading handling assembly 44 refers to a structure or a combination of structures capable of acquiring and transferring the battery cells 200, and the loading handling assembly 44 may include a robotic arm, a clamp, a trolley, a conveyor belt, or other structures; the battery cells 200 acquired by the loading handling assembly 44 come from the loading conveyor assembly 42; the loading handling assembly 44 can also transfer the acquired battery cells 200 to the singulation assembly 45; the number of battery cells 200 transferred by the loading handling assembly 44 at a time may be one, two, or more.

The singulation assembly 45 refers to a structure or a structural assembly capable of accommodating the battery cells 200, and the singulation assembly 45 may include a platform, a chamber, a conveyor belt, or other structures; the battery cells 200 accommodated in the singulation assembly 45 come from the loading handling assembly 44; the loading transport assembly 46 can acquire the battery cells 200 from the singulation assembly 45; the number of battery cells 200 that can be accommodated in the singulation assembly 45 may be one, two, or more.

The embodiments further provide some structures of the loading module 40. The loading handling assembly 44 transfers the battery cells 200 on the loading conveyor assembly 42, and the singulation assembly 45 receives and temporarily stores the battery cells 200 from the loading handling assembly 44 to shorten the operation cycle of the loading conveyor assembly 42, so as to better design the cycle time of the inspection device 100.

**In** some embodiments, referring to FIG. 9, the loading handling assembly 44 includes a handling support 441, a handling movable plate 442, and a handling gripper 443. A loading support may be disposed on the frame 10, and in this case, the handling support 441 is disposed on the loading support and can move along the loading support. The handling movable plate 442 is disposed on the handling support 441 and can move up and down relative to the handling support 441. The handling gripper 443 is disposed on the handling movable plate 442, and the handling gripper 443 can clamp and release the battery cell 200. According to the positions of the singulation assembly 45 and the loading conveyor assembly 42, the handling gripper 443 can also rotate relative to the handling movable plate 442.

The handling support 441 can move along the loading support through a rodless cylinder, a screw rod slider, or other structures, the handling movable plate 442 can move up and down relative to the handling support 441 through a pneumatic cylinder, a hydraulic cylinder, or other structures, and the handling gripper 443 can rotate relative to the handling movable plate 442 through a motor, a pneumatic rotary cylinder, or other structures.

In some embodiments of the present application, the singulation assembly 45 includes at least two loading positions 451, and the at least two loading positions 451 are sequentially disposed in a third direction; the singulation assembly 45 further includes at least two singulation belts 452, the at least two singulation belts 452 are sequentially disposed in a fourth direction, and the singulation belts 452 are in one-to-one correspondence with the loading positions 451; the third direction is an extension direction of the singulation belt 452, and the fourth direction is perpendicular to the third direction.

The loading position 451 refers to a position on the singulation assembly 45 for placing the battery cell 200. During the process of transferring the battery cells 200 to the singulation assembly 45 by the loading handling assembly 44, the loading handling assembly 44 can transfer the battery cell 200 to the loading position 451.

The singulation belt 452 refers to a conveyor belt structure capable of carrying and conveying the battery cell 200. The singulation belt 452 may include a PVC conveyor belt, a belt-type conveyor belt, a chain-plate conveyor belt, or other conveyor belts.

The one-to-one correspondence between the singulation belts 452 and the loading positions 451 means that each singulation belt 452 is provided with a loading position 451. In some embodiments, the loading position 451 may only refer to a position defined in space; in some other embodiments, a member capable of limiting the position of the battery cell 200 may also be disposed above the singulation belt 452 to form the loading position 451, and in this case, the battery cell 200 should be capable of moving with the operation of the singulation belt 452 and leave the loading position 451.

The third direction refers to the direction in which the singulation belts 452 extend and the direction in which the singulation belts 452 convey the battery cells 200, the fourth direction refers to the direction in which the singulation belts 452 are arranged, and the third direction is perpendicular to the fourth direction. Referring to FIG. 13, the third direction is a direction in which an X axis is located in the figure, and the fourth direction is a direction in which a Y axis is located in the figure.

It can be understood that according to the arrangement positions and orientations of the singulation assembly 45 and the unloading conveyor assembly 62, the third direction may be parallel to the first direction, and the third direction may also intersect with the first direction; that is, the fourth direction may be parallel to the second direction, and the fourth direction may also intersect with the second direction.

Since there are at least two singulation belts 452, and each singulation belt 452 is provided with one loading position 451, the loading positions 451 are sequentially disposed in the fourth direction. In addition, the loading positions 451 are also sequentially disposed in the third direction. That is, the at least two loading positions 451 are obliquely staggered, thereby ensuring that no unloading positions 622 overlap in either the third direction or the fourth direction.

In some embodiments, referring to FIG. 13, the singulation assembly 45 includes four singulation belts 452, and in a direction from near to far relative to the carrier assemblies 50, the four singulation belts 452 are sequentially referred to as a first singulation belt, a second singulation belt, a third singulation belt, and a fourth singulation belt. Correspondingly, the loading positions 451 on the four unloading singulation belts 452 are referred to as a first loading position, a second loading position, a third loading position, and a fourth loading position, respectively, and the four singulation belts 452 all convey the battery cells 200 in a direction from top to bottom. In this case, the fourth loading position is located below the third loading position, the third loading position is located below the second loading position, and the second loading position is located below the first loading position. With the operation of the four singulation belts 452, there are always no battery cells 200 between the four loading positions 451 and the carrier assemblies 50. Optionally, the length of the first singulation belt may be the same as the length of one battery cell 200, and in this case, the first singulation belt no longer conveys the battery cell 200 and only provides support. On this basis, the first singulation belt may be substantially replaced with a platform, a cavity, and other structures.

During the process of transferring the battery cells 200 to the carrier assemblies 50 by the loading transport assembly 46, since the battery cells 200 being transferred may cross over other battery cells 200 located on the singulation assembly 45, a case of crossing over the battery cells 200 occurs. In this case, if the battery cells 200 being transferred fall, collisions between the battery cells 200 may occur, which may lead to safety incidents such as fire or explosion.

Accordingly, in the embodiments, the loading positions 451 are disposed on the singulation assembly 45, and different loading positions 451 are disposed in a staggered manner, such that during the process of transferring the battery cells 200 to the carrier assemblies 50 by the loading transport assembly 46, other battery cells 200 are not prone to appear below the battery cells 200 being transferred, thereby reducing the occurrence of safety accidents caused by the battery cells 200 falling, and improving the safety performance of the inspection device 100.

**In** some embodiments of the present application, the loading transport assembly 46 includes loading variable-pitch grippers, and the loading variable-pitch grippers are configured to transfer the battery cells 200 in different loading positions 451 to different carrier assemblies 50.

The loading variable-pitch gripper refers to a structure or a combination of structures capable of causing different battery cells 200 to move different distances. During the process of transferring the battery cells 200 by the loading transport assembly 46 at a time, the distances between each loading position 451 and the carrier assembly 50 are different from one another. Correspondingly, the loading variable-pitch gripper can cause different battery cells 200 to move different distances.

**In** some embodiments, the loading variable-pitch gripper may include a plurality of grippers having different strokes, and each gripper is configured to acquire one battery cell 200. During a single transfer process of the loading transport assembly 46, the plurality of grippers operate simultaneously but have different strokes, such that the plurality of grippers can simultaneously acquire the battery cells 200 from different loading positions 451 and can simultaneously transfer the battery cells 200 to the carrier assemblies 50. In some other embodiments, the loading variable-pitch gripper may also include a plurality of grippers having the same stroke, and in this case, the time at which each gripper opens and releases the battery cell 200 is different; that is, the plurality of grippers can move with the same stroke and can acquire the battery cells 200 from different loading positions 451 at different times. In yet other embodiments, the loading variable-pitch gripper can also acquire the battery cells 200 from different loading positions 451 through other structures.

In some embodiments, the number of the grippers in the loading variable-pitch gripper is the same as the number of the singulation belts 452, such that during a single transfer process of the loading variable-pitch gripper, each gripper can acquire a corresponding battery cell 200 from one singulation belt 452.

Different loading positions 451 are disposed in a staggered manner; that is, the distances between the loading positions 451 and the carrier assemblies 50 are different. Therefore, in the embodiments, the loading variable-pitch grippers can simultaneously obtain the battery cells 200 from the singulation assembly 45 and simultaneously transfer the battery cells 200 to different positions on the carrier assemblies 50, such that the battery cells 200 can remain synchronized during the transfer process, so as to design the takt time of this step and improve the safety performance of the inspection device 100 in coordination with the operation of the singulation assembly 45.

In some embodiments, the loading variable-pitch gripper includes a transport support 461, a transport movable plate 462, and at least two transport grippers 463. The transport support 461 is disposed on the loading support and is capable of moving along the loading support, the transport movable plate 462 is disposed on the transport support 461 and is capable of moving up and down relative to the transport support 461, and the at least two transfer grippers 463 are disposed on the transport movable plate 462. Each transport gripper 463 is configured to acquire one battery cell 200, and each transport gripper 463 has a different stroke.

The transport support 461 can move along the loading support through a rodless cylinder, a screw rod slider, or other structures, the transport movable plate 462 can move up and down relative to the transport support 461 through a pneumatic cylinder, a hydraulic cylinder, or other structures, and the transport gripper 463 can move relative to the transport support 461 through a pneumatic cylinder, a hydraulic cylinder, or other structures, and each transport gripper 463 can have a different stroke.

According to some embodiments of the present application, referring to FIGs. 2 and 5, FIG. 2 is a schematic view of the inspection device 100 in some embodiments of the present application, and FIG. 5 is a schematic three-dimensional view of a standard calibration module 70 in some embodiments of the present application.

In some embodiments of the present application, the inspection device 100 further includes a standard calibration module 70, the standard calibration module 70 is configured to convey a standard battery 71 to the loading module 40, and the standard calibration module 70 is further configured to receive the standard battery 71 conveyed from the unloading module 60.

The standard battery 71 refers to a battery cell 200 confirmed to be qualified after inspection. The standard battery 71 is used to calibrate the inspection capability of the inspection device 100 to determine whether deviations exist in the inspection device 100 that may lead to inaccurate inspection results.

The standard calibration module 70 refers to a structure or a combination of structures capable of providing the standard battery 71 to the loading module 40, and the standard calibration module 70 may be a conveyor belt, a trolley, a clamp, a robotic arm, or other structures; the standard battery 71 is stored on the standard calibration module 70, and the standard calibration module 70 can convey the standard battery 71 to the loading module 40 and can also receive the standard battery 71 transferred from the unloading module 60 after being inspected by the inspection device 100.

The number of standard batteries 71 stored on the standard calibration module 70 should be the same as the number of battery cells 200 provided to the loading module 40 by the previous process or by an operator, thereby reducing any negative impact that differences in quantity may have on calibration.

The standard calibration module 70 may operate once after each inspection of the battery cells 200, and the standard calibration module 70 may also operate at a certain moment according to requirements; in some embodiments, the standard calibration module 70 may first operate automatically once after the inspection device 100 is powered on each day, so as to achieve daily calibration of the inspection device 100; in some other embodiments, the standard calibration module 70 may also be manually activated by an operator to operate once when a large number of unqualified battery cells 200 appear.

To enable the inspection device 100 to have high inspection accuracy, it is necessary to frequently calibrate the inspection device 100. Accordingly, the embodiments provide the standard calibration module 70. The standard calibration module 70 can convey the standard battery 71 to the loading module 40, and for a battery that meets all parameters of the standard battery 71, after the standard battery 71 is conveyed to the loading module 40, the standard battery can be first handled by the carrier 51 module, then by the unloading module 60, and is finally sent back to the standard calibration module 70. During this process, the first inspection module 20 and the second inspection module 30 can inspect the standard battery 71, and the operator can determine whether the inspection device 100 is abnormal according to the monitoring results, thereby achieving the effect of calibrating the inspection device 100.

In some embodiments of the present application, the standard calibration module 70 includes at least two calibration conveyor belts 72, and each calibration conveyor belt 72 is configured to convey one standard battery 71.

The calibration conveyor belt 72 may include a PVC conveyor belt, a belt-type conveyor belt, a chain-plate conveyor belt, or other conveyor belts. When the standard calibration module 70 does not operate, the calibration conveyor belt 72 does not work and only serves to support and store the standard battery 71.

In some embodiments, the intermediate transfer assembly 43 includes at least two intermediate conveyor belts, the number of the intermediate conveyor belts and the number of the calibration conveyor belts 72 are the same as the number of the unloading conveyor belts 621, and two ends of the calibration conveyor belt 72 are each connected to the intermediate conveyor belt and the unloading conveyor belt 621; when the standard calibration module 70 operates, the calibration conveyor belt 72 can convey the standard battery 71 to the intermediate conveyor belt, and then the loading transfer gripper 411 in the loading module 40 can acquire the standard battery 71 from the intermediate conveyor belt and transfer the standard battery 71 to the loading handling assembly 44; after the inspection device 100 completes the inspection of the standard battery 71, the unloading variable-pitch gripper 611 in the unloading module 60 transfers the standard battery 71 to the unloading conveyor assembly 62, and the unloading conveyor assembly 62 conveys the standard battery 71 to the intermediate conveyor belt, and the calibration process of the inspection device 100 ends.

In the embodiments, the standard calibration module 70 includes a plurality of calibration conveyor belts 72, so as to correspond to the intermediate transfer assembly 43 and the unloading conveyor assembly 62. As a result, the calibration conveyor belt 72 conveys the standard battery 71 to the intermediate transfer assembly 43, and the unloading conveyor assembly 62 sends the standard battery 71 back to the calibration conveyor belt 72.

According to some embodiments of the present application, referring to FIG. 2, FIG. 2 is a schematic view of the inspection device 100 in some embodiments of the present application.

In some embodiments of the present application, the carrier assembly 50 includes at least two carriers 51, and the carriers 51 are each configured to carry the battery cell 200 and drive the battery cell 200 to pass through the second inspection module 30.

The carrier 51 refers to a structure or a structural assembly for carrying the battery cell 200 and driving the battery cell 200 to move, and the carrier 51 may be a clamp, a trolley, a gripper, or other structures disposed on the conveyor belt; the battery cell 200 acquired by the carrier 51 comes from the loading module 40, specifically from the loading transport assembly 46 of the loading module 40.

Each carrier 51 may only be configured to carry one battery cell 200, or may be configured to carry two or more battery cells 200. According to the number of battery cells 200 carried by a single carrier 51 and the number of battery cells 200 transferred to the carrier assemblies 50 by the loading module 40 at a time, there may be one or more carriers 51. In some embodiments, the number of carriers 51 is the same as the number of battery cells 200 transferred by the loading module 40 at a time, and each carrier 51 is configured to carry one battery cell 200. The plurality of carriers 51 can move synchronously to drive the battery cells 200 to move, and each carrier 51 can also move independently.

The carrier 51 can drive the battery cell 200 to pass through the second inspection module 30, and enable the battery cell 200 to be inspected by the second inspection module 30; according to the specific type of each unit in the second inspection module 30, the carrier 51 can stop moving when it reaches a certain unit for inspection, and the carrier 51 may also pass through each unit without stopping.

The embodiments provide some structures of the carrier assembly 50. The carrier assembly 50 includes at least two carriers 51, such that the carrier assembly 50 can simultaneously convey a plurality of battery cells 200, and the second inspection module 30 can inspect the plurality of battery cells 200 to improve the inspection efficiency.

In some embodiments, sensors may be disposed on the carrier 51 to determine whether a battery cell 200 is present in the carrier 51, so as to reduce the occurrence of the loading module 40 placing a battery cell 200 into a carrier 51 that already contains a battery cell 200, thereby reducing collisions between the battery cells 200 and improving the safety performance of the inspection device 100; in some other embodiments, the sensor can also be used to inspect whether the position of the battery cell 200 is correct, for example, whether there is any tilt, misalignment, or the like, thereby reducing occurrences of misinspection when the battery cell 200 passes through the second inspection module 30 and reducing any negative impact on the inspection results.

In some embodiments, the carrier assembly 50 may further include a track 55, and the carrier 51 may be disposed on the track 55 and move along the track 55. In this case, the units in the second inspection module 30 may be disposed on both sides of the track 55, and the track 55 may be in the form of a straight line, a circle, a square, an arc, or other shapes.

According to some embodiments of the present application, referring to FIGs. 2 and 11, FIG. 2 is a schematic view of the inspection device 100 in some embodiments of the present application, and FIG. 11 is a schematic three-dimensional view of the loading conveyor assembly 42 and the first inspection module 20 in the loading module 40 according to some embodiments of the present application.

In some embodiments of the present application, the first inspection module 20 includes a bottom surface inspection assembly 21, and the bottom surface inspection assembly 21 is configured to inspect the bottom surface of the battery cell 200; and/or the first inspection module 20 includes first side surface inspection assemblies 22, and the first side surface inspection assemblies 22 are configured to inspect two opposite side surfaces of the battery cell 200.

The bottom surface inspection assembly 21 refers to a unit or a combination of units for inspecting whether the appearance of the bottom surface of the battery cell 200 is intact. The bottom surface inspection assembly 21 may include machine vision units such as a camera, or may include other inspection units. In some embodiments, the bottom surface inspection assembly 21 may be disposed below the loading conveyor assembly 42, so as to facilitate the acquisition of information from the bottom surface of the battery cell 200.

The first side surface inspection assemblies 22 refer to units or a combination of units for inspecting whether the appearance of two opposite first sides of the battery cell 200 is intact. The first side surface inspection assembly 22 may include machine vision units such as a camera, or may include other inspection units. In some embodiments, the first side surface inspection assemblies 22 may be disposed on both sides of the loading conveyor assembly 42, so as to facilitate the acquisition of information from the two first side surfaces of the battery cell 200.

The embodiments provide some structures of the first inspection module 20, such that the first inspection module 20 can inspect the bottom surface and two opposite side surfaces of the passing battery cell 200.

According to some embodiments of the present application, referring to FIG. 2, FIG. 2 is a schematic view of the inspection device 100 in some embodiments of the present application.

In some embodiments of the present application, the second inspection module 30 includes a top surface inspection assembly 31, and the top surface inspection assembly 31 is configured to inspect the top surface of the battery cell 200; and/or the second inspection module 30 includes a post terminal inspection assembly 32, and the post terminal inspection assembly 32 is configured to inspect a post terminal 2011 of the battery cell 200; and/or the second inspection module 30 includes an anti-explosion valve inspection assembly 33, and the anti-explosion valve inspection assembly 33 is configured to inspect an anti-explosion valve 2012 of the battery cell 200; and/or the second inspection module 30 includes second side surface inspection assemblies 34, the second side surface inspection assemblies 34 each include at least one inspection unit, and the second side surface inspection assemblies 34 are configured to inspect two opposite side surfaces of the battery cell 200.

The top surface inspection assembly 31 refers to a unit or a combination of units for inspecting whether the appearance of the top surface of the battery cell 200 is intact. The top surface inspection assembly 31 may include machine vision units such as a camera, or may include other inspection units. In some embodiments, the top surface inspection assembly 31 may be disposed above the track 55 of the carrier assembly 50, so as to facilitate the acquisition of information from the top surface of the battery cell 200.

The post terminal inspection assembly 32 refers to a unit or a combination of units for inspecting whether the appearance of the post terminal 2011 of the battery cell 200 is intact. The post terminal inspection assembly 32 may include machine vision units such as a camera, or may include other inspection units. In some embodiments, the post terminal inspection assembly 32 may include a plurality of image acquisition devices oriented in different directions, so as to acquire image information of the post terminal 2011 from a plurality of different directions, thereby better determining the appearance condition of the post terminal 2011; in some other embodiments, the post terminal inspection assembly 32 may be disposed above the track 55 of the carrier assembly 50, so as to facilitate the acquisition of information from the post terminal 2011 of the battery cell 200.

The anti-explosion valve inspection assembly 33 refers to a unit or a combination of units for inspecting whether the appearance of the anti-explosion valve 2012 of the battery cell 200 is intact. The anti-explosion valve inspection assembly 33 may include machine vision units such as a camera, or may include other inspection units. In some embodiments, the anti-explosion valve inspection assembly 33 may be disposed above the track 55 of the carrier assembly 50, so as to facilitate the acquisition of information from the anti-explosion valve 2012 of the battery cell 200.

The second side surface inspection assemblies 34 refer to units or a combination of units for inspecting whether the appearance of two opposite second sides of the battery cell 200 is intact. The second side surface inspection assembly 34 may include machine vision units such as a camera, or may include other inspection units. In some embodiments, the second side surface inspection assemblies 34 may be disposed on both sides of the track 55 of the carrier assembly 50, so as to facilitate the acquisition of information from the two second side surfaces of the battery cell 200.

The embodiments provide some structures of the second inspection module 30, such that the second inspection module 30 can inspect the post terminal 2011, the anti-explosion valve 2012, the top surface, and the other two opposite side surfaces of the battery cell 200.

According to some embodiments of the present application, referring to FIG. 2, FIG. 2 is a schematic view of the inspection device 100 in some embodiments of the present application.

**In** some embodiments of the present application, the unloading module 60 is further configured to acquire the battery cells 200 and transfer the battery cells 200 to the carrier assemblies 50; the carrier assemblies 50 are further configured to receive the battery cells 200 transferred from the unloading module 60 and convey the battery cells 200 to pass through the second inspection module 30; the loading module 40 is further configured to acquire the battery cells 200 from the carrier assemblies 50 and drive the battery cells 200 to pass through the first inspection module 20.

When a large number of unqualified battery cells 200 continuously appear among the battery cells 200 inspected by the inspection device 100, the inspection device 100 is also capable of operating in reverse. In this case, the unloading module 60 can transfer the battery cells 200 to the carrier assemblies 50, the carrier assemblies 50 can convey the battery cells 200 to the loading module 40, and the loading module 40 can acquire the battery cells 200 from the carrier assemblies 50 and transfer the acquired battery cells 200. During this process, the first inspection module 20 and the second inspection module 30 can inspect the battery cells 200.

In some embodiments, before the inspection device 100 operates in reverse, the supply of new battery cells 200 to the inspection device 100 should be stopped, and the inspection device 100 should be stopped upon completing the inspection of all battery cells 200 in the inspection device. In this case, there are no more battery cells 200 in the inspection device 100, thereby reducing the occurrence of collisions of the battery cell 200 during the reverse operation of the inspection device 100.

In the embodiments, the inspection device 100 can also operate in reverse. For example, when the inspection device 100 inspects that there are many unqualified battery cells 200, the inspection device 100 can operate in reverse, such that the battery cells 200 enter the inspection device 100 from the unloading module 60, and the battery cells 200 are reinspected, thereby further confirming whether the battery cells 200 are qualified.

According to some embodiments of the present application, referring to FIG. 2, FIG. 2 is a schematic view of the inspection device 100 in some embodiments of the present application.

In some embodiments of the present application, the inspection device 100 further includes a first feeding module 80 with one end extending to the unloading module 60, the first feeding module 80 is configured to convey the battery cells 200, the loading module 40 can acquire the battery cells 200 from the first feeding module 80, and the unloading module 60 can transfer the battery cells 200 to the first feeding module 80.

The first feeding module 80 refers to a structure or a combination of structures capable of receiving and conveying the battery cells 200 transferred by the unloading module 60, the first feeding module 80 may be a conveyor belt, a trolley, or other structures, and the first feeding module 80 is configured to convey the battery cells 200 at the first discharge port to the next process or other required positions.

The first feeding module 80 can also extend to the vicinity of the loading module 40, such that the loading module 40 can acquire the battery cells 200 from the first feeding module 80. That is, in addition to conveying the inspected battery cells 200 to the next process, the first feeding module 80 can also convey the battery cells 200 output from the previous process to the vicinity of the loading module 40.

According to the positions of the loading module 40 and the unloading module 60, an extension direction of the first feeding module 80 may also be in the form of a straight line, an arc, an L-shape, or other shapes.

In the embodiments, the first feeding module 80 is provided, such that the first feeding module 80 conveys the battery cells 200 output after the previous process to the inspection device 100 for acquisition by the loading module 40. In addition, since the first feeding module 80 extends to the first discharge port, the first feeding module 80 can also convey the battery cells 200 transferred by the unloading module 60 to the next process, so as to achieve continuous inspection of the battery cells 200.

In some embodiments of the present application, the inspection device 100 further includes a second feeding module 90 disposed at the unloading module 60, and the unloading module 60 can convey the battery cells 200 to the second feeding module 90.

The second feeding module 90 refers to a structure or a combination of structures capable of receiving and conveying the battery cells 200 transferred by the unloading module 60, the second feeding module 90 may be a conveyor belt, a trolley, or other structures, and the second feeding module 90 is configured to convey the battery cells 200 at the second discharge port to other positions, thereby providing space for the battery cells 200 subsequently conveyed to the second discharge port, reducing collisions between the battery cells 200, and improving the safety performance of the inspection device 100.

In some embodiments, after the second feeding module 90 conveys the battery cells 200 to other positions, the operator may collect the battery cells 200 and place the battery cells 200 at the loading module 40 again at a certain moment for reinspection.

In the embodiments, the second feeding module 90 is provided, such that the second feeding module 90 can convey the battery cells 200 at the second discharge port to other positions, and the unloading module 60 can continue to convey the unqualified battery cells 200 to the second discharge port without causing blockage, jamming, or the like at the second discharge port.

According to some embodiments of the present application, the number of battery cells 200 conveyed by the loading module 40, the carrier assemblies 50, and the unloading module 60 at a time may be the same or different. The number of the battery cells 200 conveyed by the loading module 40, the carrier assemblies 50, and the unloading module 60 at a time may be one, two, or more. In the embodiments, the operational process of the inspection device 100 is specifically illustrated by taking an example where the number of the battery cells 200 conveyed by the loading module 40, the carrier assemblies 50, and the unloading module 60 at a time is the same, namely four.

The first feeding module 80 conveys four battery cells 200 to be inspected to the loading module 40, one loading transfer gripper 411 acquires a battery cell 200 from the first feeding module 80 and transfers the battery cell to the intermediate transfer assembly 43, and then another loading transfer gripper 411 acquires the battery cell 200 from the intermediate transfer assembly 43 and transfers the battery cell to the loading conveyor assembly 42; the loading conveyor assembly 42 acquires the battery cell 200 and transfers the battery cell to the loading handling assembly 44, and during the process of conveying the battery cell 200 by the loading conveyor assembly 42, the first inspection module 20 can acquire the appearance image information of the bottom surface and two first side surfaces of the battery cell 200; the loading handling assembly 44 acquires the battery cell 200 from the loading conveyor assembly 42 and transfers the battery cell 200 to the singulation assembly 45; the singulation assembly 45 operates such that the battery cell 200 on each singulation is located at a different loading position 451, thereby enabling the battery cells 200 to be arranged obliquely on the singulation assembly 45; the plurality of grippers of the loading transport assembly 46 operate simultaneously but have different strokes, such that the plurality of grippers can simultaneously acquire the battery cells 200 from different loading positions 451 and can simultaneously transfer the battery cells 200 to the carrier assemblies 50; four carriers 51 respectively carry the four battery cells 200 to move to the unloading transfer assembly 61 along the track 55, and during this process, the second inspection module 30 acquires the appearance information of the top surface, the post terminal 2011, the anti-explosion valve 2012, and two second side surfaces of each battery cell 200; the plurality of grippers in the unloading transfer assembly 61 operate simultaneously but have different strokes, such that the plurality of grippers can simultaneously acquire the battery cells 200 from the carrier assemblies 50 and can simultaneously transfer the battery cells 200 to different unloading positions 622; the unloading conveyor assembly 62 conveys the battery cells 200 to the unloading sorting assembly 63, the sorting blocking member 633 blocks the qualified battery cells 200 according to the inspection results of the battery cells 200, and the unqualified battery cells 200 are conveyed to the second discharge port by the unloading conveyor assembly 62; the sorting grippers 632 acquire the qualified battery cells 200 from the unloading conveyor belt 621 or the buffer assembly 64, and finally output four qualified battery cells 200 at the first discharge port.

Finally, it should be noted that the above embodiments are only used to illustrate the technical solutions of the present application, rather than limit the same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of the claims and specification of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

1. An inspection device applied to inspection of a battery cell, wherein the inspection device comprises:
a first inspection module and a second inspection module respectively configured to inspect different parts of the battery cell;
a loading module configured to acquire and transfer the battery cell, the loading module being capable of driving the battery cell to pass through the first inspection module;
a carrier assembly configured to receive the battery cell transferred from the loading module, the carrier assembly being configured to convey the battery cell to pass through the second inspection module; and
an unloading module configured to acquire and transfer the battery cell transported by the carrier assembly.

2. The inspection device according to claim 1, wherein the inspection device further comprises a first discharge port and a second discharge port, and the unloading module is further configured to transfer the battery cell to a first discharge port or a second discharge port.

3. The inspection device according to claim 2, wherein the unloading module comprises an unloading transfer assembly, an unloading conveyor assembly, and an unloading sorting assembly;
the unloading transfer assembly is configured to acquire the battery cell from the carrier assembly and transfer the battery cell to the unloading conveyor assembly;
the unloading conveyor assembly is configured to enable the battery cell transferred from the unloading transfer assembly to pass through the unloading sorting assembly and be conveyed to the second discharge port;
the unloading sorting assembly is configured to acquire the battery cell from the unloading conveyor assembly and transfer the battery cell to the first discharge port.

4. The inspection device according to claim 3, wherein the unloading conveyor assembly comprises at least two unloading conveyor belts, and each unloading conveyor belt is configured to receive the battery cell transferred from the unloading transfer assembly and to convey the battery cell to the second discharge port.

5. The inspection device according to claim 4, wherein the at least two unloading conveyor belts are sequentially disposed in a first direction, the unloading conveyor belts are provided with unloading positions, and the unloading positions on different unloading conveyor belts are sequentially disposed in a second direction;
the first direction is perpendicular to the second direction, and the second direction is parallel to an extension direction of the unloading conveyor belt.

6. The inspection device according to claim 5, wherein the unloading transfer assembly comprises unloading variable-pitch grippers, and the unloading variable-pitch grippers are configured to transfer the battery cells from the carrier assemblies to different unloading positions.

7. The inspection device according to any one of claims 4 to 6, wherein the unloading module further comprises a buffer assembly, the unloading sorting assembly is capable of transferring the battery cell to the buffer assembly, and the unloading sorting assembly is capable of transferring the battery cell from the buffer assembly to the unloading conveyor assembly.

8. The inspection device according to claim 7, wherein the buffer assembly comprises buffer positions, and the buffer positions are configured to accommodate the battery cells;
a number of the buffer positions is one less than a number of the unloading conveyor belts, or a number of the buffer positions is greater than or equal to a number of the unloading conveyor belts.

9. The inspection device according to claim 7 or 8, wherein the unloading sorting assembly comprises a sorting support and sorting grippers;
the sorting grippers are movably disposed on the sorting support, the sorting grippers are capable of transferring the battery cells from the unloading conveyor belts to the buffer assembly or the first discharge port, and the sorting grippers are capable of transferring the battery cells from the buffer assembly to the unloading conveyor belts.

10. The inspection device according to claim 9, wherein a number of the sorting grippers is the same as a number of the unloading conveyor belts, and the sorting grippers are disposed opposite to corresponding unloading conveyor belts.

11. The inspection device according to claim 9 or 10, wherein the unloading sorting assembly further comprises sorting blocking members, the sorting blocking members are movably disposed on the sorting support, and the sorting blocking members are capable of blocking the unloading conveyor assembly from conveying the battery cells to the second discharge port.

12. The inspection device according to claim 11, wherein a number of the sorting blocking members is the same as a number of the unloading conveyor belts, and the sorting blocking members are in one-to-one correspondence with the unloading conveyor belts.

13. The inspection device according to any one of claims 1 to 12, wherein the loading module comprises a loading transfer assembly, a loading conveyor assembly, and a loading transport assembly;
the loading transfer assembly is configured to acquire the battery cell and transfer the battery cell to the loading conveyor assembly;
the loading conveyor assembly is configured to acquire the battery cell from the loading transfer assembly and enable the battery cell to pass through the first inspection module;
the loading transport assembly is configured to acquire the battery cell from the loading conveyor assembly and transfer the battery cell to the carrier assembly.

14. The inspection device according to claim 13, wherein the loading module further comprises an intermediate transfer assembly;
the loading transfer assembly comprises two loading transfer grippers, either of which is configured to acquire the battery cell and transfer the battery cell to the intermediate transfer assembly, and the other of which is configured to acquire the battery cell from the intermediate transfer assembly and transfer the battery cell to the loading conveyor assembly.

15. The inspection device according to claim 13 or 14, wherein the loading module further comprises a loading handling assembly and a singulation assembly, and the loading handling assembly is configured to acquire the battery cell from the loading conveyor assembly and transfer the battery cell to the singulation assembly;
the singulation assembly is configured to accommodate the battery cell, and the loading transport assembly is capable of acquiring the battery cell from the singulation assembly.

16. The inspection device according to claim 15, wherein the singulation assembly comprises at least two loading positions, and the at least two loading positions are sequentially disposed in a third direction;
the singulation assembly further comprises at least two singulation belts, the at least two singulation belts are sequentially disposed in a fourth direction, and the singulation belts are in one-to-one correspondence with the loading positions;
the third direction is an extension direction of the singulation belt, and the fourth direction is perpendicular to the third direction.

17. The inspection device according to claim 16, wherein the loading transport assembly comprises loading variable-pitch grippers, and the loading variable-pitch grippers are configured to transfer the battery cells in different loading positions to different carrier assemblies.

18. The inspection device according to any one of claims 1 to 17, wherein the inspection device further comprises a standard calibration module, the standard calibration module is configured to convey a standard battery to the loading module, and the standard calibration module is further configured to receive the standard battery conveyed from the unloading module.

19. The inspection device according to claim 18, wherein the standard calibration module comprises at least two calibration conveyor belts, and each calibration conveyor belt is configured to convey one standard battery.

20. The inspection device according to any one of claims 1 to 19, wherein the carrier assembly comprises at least two carriers, and each carrier is configured to carry the battery cell and drive the battery cell to pass through the second inspection module.

21. The inspection device according to any one of claims 1 to 20, wherein the first inspection module comprises a bottom surface inspection assembly, and the bottom surface inspection assembly is configured to inspect a bottom surface of the battery cell; and/or
the first inspection module comprises first side surface inspection assemblies, and the first side surface inspection assemblies are configured to inspect two opposite side surfaces of the battery cell.

22. The inspection device according to any one of claims 1 to 21, wherein the second inspection module comprises a top surface inspection assembly, and the top surface inspection assembly is configured to inspect a top surface of the battery cell; and/or
the second inspection module comprises a post terminal inspection assembly, and the post terminal inspection assembly is configured to inspect a post terminal of the battery cell; and/or
the second inspection module comprises an anti-explosion valve inspection assembly, and the anti-explosion valve inspection assembly is configured to inspect an anti-explosion valve of the battery cell; and/or
the second inspection module comprises second side surface inspection assemblies, the second side surface inspection assemblies each comprise at least one inspection unit, and the second side surface inspection assemblies are configured to inspect two opposite side surfaces of the battery cell.

23. The inspection device according to any one of claims 1 to 22, wherein the unloading module is further configured to acquire the battery cell and transfer the battery cell to the carrier assembly;
the carrier assembly is further configured to receive the battery cell transferred from the unloading module and convey the battery cell to pass through the second inspection module;
the loading module is further configured to acquire the battery cell from the carrier assembly and drive the battery cell to pass through the first inspection module.

24. The inspection device according to any one of claims 1 to 23, wherein the inspection device further comprises a first feeding module with one end extending to the unloading module, the first feeding module is configured to convey the battery cell, the loading module is capable of acquiring the battery cell from the first feeding module, and the unloading module is capable of transferring the battery cell to the first feeding module.

25. The inspection device according to any one of claims 1 to 24, wherein the inspection device further comprises a second feeding module disposed at the unloading module, and the unloading module is capable of conveying the battery cell to the second feeding module.
